# EUROPEAN PATENT SPECIFICATION

(11) **EP 4 184 911 B1**
(45) Date of publication and mention of the grant of the patent: **09.04.2025**
(21) Application number: 22794291.9
(22) Date of filing: 18.02.2022
(51) Int. Cl.: H04N 23/68, H04N 23/55, H04N 23/57, H04N 23/54

(54) **DRIVING APPARATUS, PHOTOGRAPHING MODULE, AND ELECTRONIC DEVICE**
ANTRIEBSVORRICHTUNG, FOTOGRAFIEMODUL UND ELEKTRONISCHE VORRICHTUNG
APPAREIL D'ENTRAÎNEMENT, MODULE PHOTOGRAPHIQUE ET DISPOSITIF ÉLECTRONIQUE

(30) Priority: 29.04.2021 CN 202110477635; 24.06.2021 CN 202110708137
(43) Date of publication of application: 24.05.2023
(73) Proprietor: Honor Device Co., Ltd., Shenzhen, Guangdong 518040 (CN)
(72) Inventor: XIA, Taihong, Shenzhen, Guangdong 518040 (CN); YUAN, Shuai, Shenzhen, Guangdong 518040 (CN); CHEN, Chao, Shenzhen, Guangdong 518040 (CN); YU, Yanghua, Shenzhen, Guangdong 518040 (CN)
(74) Representative: Gill Jennings & Every LLP
(86) International application number: PCT/CN2022/076952
(87) International publication number: WO 2022/227811

(56) References cited:
- WO-A1-2011/122438
- CN-A- 110 958 374
- CN-A- 111 077 715
- CN-A- 111 552 052
- CN-A- 111 552 052
- CN-A- 112 399 053
- CN-A- 112 399 053
- CN-A- 112 616 001
- CN-A- 112 672 028
- CN-A- 112 702 503
- CN-A- 113 923 343
- CN-U- 211 959 363
- JP-A- 2011 209 468
- US-A1- 2008 292 296
- US-A1- 2012 019 675
- US-A1- 2012 019 675

## Description

This application claims priority to Chinese Patent Application No. 202110477635.0, filed on April 29, 2021 and entitled "DRIVING APPARATUS, CAMERA MODULE, AND ELECTRONIC DEVICE", and Chinese Patent Application No. 202110708137.2, filed on June 24, 2021 and entitled "DRIVING APPARATUS, CAMERA MODULE, AND ELECTRONIC DEVICE".

### TECHNICAL FIELD

This application relates to the field of mobile terminal technologies, and in particular, to a driving apparatus, a camera module, and an electronic device.

### BACKGROUND

In life, people often use electronic devices (such as smartphones and tablet computers) for photographing, and photographing quality of the electronic devices has become one of important standards for measuring performance of terminal devices.

Using a camera in a mobile phone as an example, a driving apparatus is usually provided in the camera, and the driving apparatus drives a lens or image sensor of the camera to move. For example, the driving apparatus drives the lens to move in a direction of an optical axis of the lens to implement a focusing function of the lens; or the driving apparatus drives the lens or the image sensor to move in a plane perpendicular to the direction of the optical axis of the lens, so as to implement an anti-shake function of the camera. Nowadays, with increasing requirements for mobile phone cameras and increasing requirements for optical performance, a higher demand is put forward on a stroke range of the driving apparatus.

However, because a structure and a driving mode of the driving apparatus are limited, a stroke of the driving apparatus is small, and a requirement for large-stroke driving cannot be met.

CN112399053A discloses a miniature optical anti-shake module and a camera module with the same. The Z-axis driving burden is small and SMA drive components have a large driving force.

CN111552052A discloses an SMA actuator, which is especially suitable for constructing a lens driving device, which realizes the automatic focusing and anti-shake of the camera and meets the requirements of product miniaturization.

US 2008/0292296 Al discloses an apparatus for compensating for vibration of an image capturing device. The apparatus includes a y-axis stage installed in a support structure so as to be movable in y-axis direction. An x-axis stage is installed on the y-axis stage so as to be movable in x-axis direction on an x plane. An image sensor is mounted on the x-axis stage. The apparatus is provided with a y-axis driver and an x-axis driver for driving the y-axis stage in the y-axis direction and the x-axis stage in the x-axis direction respectively. A control unit is installed in the image capturing device. The control unit operates to sense vibration of the image capturing device through a separate vibration sensor and to drive the y-axis driver and the x-axis driver to vibrate the image sensor in a way to compensate for the vibration of image capturing device.

### SUMMARY

In a first aspect of the present invention, there is provided a driving apparatus according to claim 1. In a second aspect of the present invention, there is provided a camera module according to claim 15.

Embodiments of this application provide a driving apparatus, a camera module, and an electronic device, where the driving apparatus has a large stroke range, which can improve optical performance of the camera module and optimize service performance of the electronic device.

According to a first aspect, this application provides a driving apparatus for driving a lens of a camera module to move, including a bearing member and a driving structure, where the lens is fixed to the bearing member, and the driving structure includes a guide member, a fixing member, and at least two groups of driving assemblies; and the guide member and the fixing member are sequentially arranged on a light outlet side of the lens in a direction of an optical axis of the lens;
at least one group of driving assemblies is connected between the fixing member and the guide member, at least one group of driving assemblies is connected between the guide member and the bearing member, the driving assemblies connected between the fixing member and the guide member are configured to drive the guide member to move in a first direction, and the driving assemblies connected between the guide member and the bearing member are configured to drive the bearing member to move in a second direction, where an included angle is formed between the first direction and the second direction; and
the driving assemblies each include an elastic rod and a shape memory alloy wire, where the shape memory alloy wire drives an end of the elastic rod to bend and deform through expansion and contraction of the shape memory alloy wire, and the elastic rod deforms and drives the guide member or the bearing member to move.

The driving apparatus according to this application is configured to drive the lens to move in a plane perpendicular to the direction of the optical axis of the lens, so as to implement an anti-shake function of the lens. The driving apparatus includes the bearing member and the driving structure, where the lens is fixed to the bearing member, and the driving structure includes the guide member, the fixing member, and the at least two groups of driving assemblies. At least one group of driving assemblies is arranged between the fixing member and the guide member, and at least one group of driving assemblies is arranged between the guide member and the bearing member, so that the driving assemblies between the fixing member and the guide member drive the guide member to move in the first direction, the driving assemblies between the guide member and the bearing member drive the bearing member to move in the second direction, and an included angle is formed between the first direction and the second direction to drive the lens to move arbitrarily in a plane where the bearing member is located. The elastic rod and the SMA wire are used as one driving assembly, and the SMA wire expands or contracts to drive an end of the elastic rod to bend and deform, and the bending deformation of the end of the elastic rod generates displacement to drive the guide member or the bearing member to move. The end of the elastic rod generates larger bending deformation, which can increase a movement amount of the SMA wire, increase a stroke range of the driving apparatus, and improve anti-shake precision of the lens and optical performance of the camera module.

In a possible implementation, a first driving assembly is connected between the fixing member and the guide member, the first driving assembly includes a first elastic rod and a first shape memory alloy wire, two ends of the first elastic rod are connected to the fixing member and the guide member respectively, and the first shape memory alloy wire is connected between the fixing member and the first elastic rod; and
a second driving assembly is connected between the guide member and the bearing member, the second driving assembly includes a second elastic rod and a second shape memory alloy wire, two ends of the second elastic rod are connected to the guide member and the bearing member respectively, and the second shape memory alloy wire is connected between the guide member and the second elastic rod.

In a possible implementation, the first driving assembly and the second driving assembly are located on different sides of the fixing member respectively, and an extension direction of the first driving assembly and an extension direction of the second driving assembly are staggered.

Through staggering of the first driving assembly and the second driving assembly, the extension direction of the first elastic rod and the extension direction of the second elastic rod are staggered, and the first elastic rod and the second elastic rod drive the guide member and the bearing member respectively to move in different directions, so that the guide member moves in the first direction, and the bearing member moves in the second direction.

In a possible implementation, the first driving assembly and the second driving assembly are located on two adjacent sides of the fixing member respectively.

In a possible implementation, the elastic rod extends along a side wall of the fixing member, and the deformed end of the elastic rod is connected to a corner of the guide member or a corner of the bearing member.

The deformed end of the elastic rod is connected to the corner of the guide member (the corner of the bearing member), so that the elastic rod drives the corner of the guide member (the corner of the bearing member) to move, thereby improving flexibility of movement of the guide member and the bearing member.

In a possible implementation, two ends of the elastic rod extend to two ends of the side wall of the fixing member respectively.

The two ends of the elastic rod extend to the two ends of the side wall of the fixing member, so that a length of the elastic rod can be increased, and elasticity of the elastic rod can be enhanced. When the SMA wire pulls the elastic rod, the elastic rod may easily bend and deform, and a bending deformation amplitude of the elastic rod can be increased.

In a possible implementation, a connecting portion is arranged between the two ends of the elastic rod, and the shape memory alloy wire is connected to the connecting portion.

The connecting portion is arranged between the two ends of the elastic rod, the SMA wire is connected between the two ends of the elastic rod, so that the SMA wire drives a part between the two ends of the elastic rod to move, and a bending deformation degree of the deformed end of the elastic rod is greater than that of a connection part of the SMA wire, thereby increasing a moving range of the deformed end of the elastic rod.

In a possible implementation, a middle section of the shape memory alloy wire is connected to the connecting portion, and two ends of the shape memory alloy wire are located on a same side of the connecting portion.

The middle section of the SMA wire is connected to the elastic rod, and the SMA wire is in a folded and wound form, so that when the SMA wire contracts, two folded ends generate acting forces on a same side of the elastic rod, thereby increasing displacement of the SMA wire. In addition, a double driving force may be provided for the bending deformation of the elastic rod, thereby increasing a moving range of the deformed end of the elastic rod.

In a possible implementation, the fixing member and the guide member each are provided with a first conductive portion and a second conductive portion, and the two ends of the shape memory alloy wire are fixed to the first conductive portion and the second conductive portion respectively.

The two ends of the SMA wire are fixed by the first conductive portion and the second conductive portion respectively, and a current is led into the SMA wire.

In a possible implementation, the first conductive portion and the second conductive portion are spaced apart along the side wall of the fixing member.

The first conductive portion and the second conductive portion are spaced apart along the side wall of the fixing member, so that a line that connects the first conductive portion to the second conductive portion is parallel to the side wall of the fixing member, and two sections of folded and wound SMA wires form a same included angle with the elastic rod, thereby improving balance of movement of the elastic rod driven by the two sections of SMA wires, and prolonging the service life of the SMA wires.

In a possible implementation, an included angle between the shape memory alloy wire and the deformed end of the elastic rod is greater than 90°.

The included angle between the SMA wire and the deformed end of the elastic rod is greater than 90°, and an included angle between the SMA wire and the other end of the elastic rod is less than 90°. A direction of an acting force of the SMA wire on the elastic rod is biased toward the other end of the elastic rod, which easily pulls the elastic rod to deform and increases the bending deformation amplitude of the elastic rod.

In a possible implementation, the first direction and the second direction are perpendicular to each other.

In a possible implementation, the driving apparatus further includes a first guiding structure and a second guiding structure, where
the first guiding structure includes a first guide groove, the first guide groove is provided in a surface that is of the fixing member and that faces the guide member or in a surface that is of the guide member and that faces the fixing member, the first guide groove extends in the first direction, and the fixing member and the guide member move relative to each other in an extension direction of the first guide groove; and
the second guiding structure includes a second guide groove, the second guide groove is provided in a surface that is of the guide member and that faces the bearing member or in a surface that is of the bearing member and that faces the guide member, the second guide groove extends in the second direction, and the guide member and the bearing member move relative to each other in an extension direction of the second guide groove.

In a possible implementation, the first guiding structure further includes a first guide post, and part of the first guide post is located in the first guide groove and moves along the first guide groove; and
the second guiding structure further includes a second guide post, and part of the second guide post is located in the second guide groove and moves along the second guide groove.

In a possible implementation, the first guiding structure further includes a first limiting groove, the first limiting groove is formed in the surface of the guide member or the surface of the fixing member, the first limiting groove extends in the first direction and is opposite to the first guide groove, and the first guide post is slidably arranged in the first limiting groove; and
the second guiding structure further includes a second limiting groove, the second limiting groove is formed in the surface of the bearing member or the surface of the guide member, the second limiting groove extends in the second direction and is opposite to the second guide groove, and the second guide post is slidably arranged in the second limiting groove.

Surfaces of two opposite sides of the fixing member and the guide member are provided with the first guide groove and the first limiting groove respectively, the first guide groove and the first limiting groove are formed opposite to each other and extend in the first direction, the first guide post is slidably arranged in a space enclosed by the first guide groove and the first limiting groove, and the first guide post moves in the extension direction of the first guide groove (the first limiting groove), to limit movement of the guide member in the first direction. Surfaces of two opposite sides of the guide member and the bearing member are provided with the second guide groove and the second limiting groove respectively, the second guide groove and the second limiting groove are formed opposite to each other and extend in the second direction, the second guide post is slidably arranged in a space enclosed by the second guide groove and the second limiting groove, and the second guide post moves in the extension direction of the second guide groove (the second limiting groove), to limit movement of the bearing member in the second direction.

In a possible implementation, the first guide post is fixed to a part that is opposite to the first guide groove and that is on the guide member or the fixing member, and the second guide post is fixed to a part that is opposite to the second guide groove and that is on the bearing member or the guide member.

One of the surfaces of the two opposite sides of the fixing member and the guide member is provided with the first guide groove, the first guide groove extends in the first direction, the first guide post is fixedly arranged on the other, and the first guide post moves along the first guide groove to limit movement of the guide element in the first direction. One of the surfaces of the two opposite sides of the guide member and the bearing member is provided with the second guide groove, the second guide groove extends in the second direction, the second guide post is fixedly arranged on the other, and the second guide post moves along the second guide groove to limit movement of the bearing element in the second direction.

In a possible implementation, the driving apparatus further includes a first displacement detection assembly and a second displacement detection assembly, where
the first displacement detection assembly includes a first Hall sensor and a first magnetic block, where one of the fixing member and the guide member is provided with the first Hall sensor, the other is provided with the first magnetic block, and the first Hall sensor and the first magnetic block are arranged opposite to each other; and
the second displacement detection assembly includes a second Hall sensor and a second magnetic block, where one of the guide member and the bearing member is provided with the second Hall sensor, the other is provided with the second magnetic block, and the second Hall sensor and the second magnetic block are arranged opposite to each other.

The first Hall sensor detects displacement of the guide member relative to the fixing member, and the second Hall sensor detects displacement of the bearing member relative to the guide member, so that detection precision of the displacement of the guide member and the bearing member can be improved, and precision of the driving apparatus can be improved.

According to a second aspect, this application provides a camera module, including a housing, a lens, and the driving apparatus according to any one of the foregoing implementations, where a surface of a side of the housing is provided with a mounting hole, the lens is partially accommodated in the housing through the mounting hole, and the driving apparatus is located in the housing.

In the camera module according to this application, the driving apparatus is arranged in the housing, and the driving apparatus drives the lens to move to implement an anti-shake function of the lens. The driving apparatus includes a bearing member and a driving structure, where the lens is fixed to the bearing member, and the driving structure includes a guide member, a fixing member, and the at least two groups of driving assemblies. At least one group of driving assemblies is arranged between the fixing member and the guide member, and at least one group of driving assemblies is arranged between the guide member and the bearing member, so that the driving assemblies between the fixing member and the guide member drive the guide member to move in a first direction, the driving assemblies between the guide member and the bearing member drive the bearing member to move in a second direction, and an included angle is formed between the first direction and the second direction to drive the lens to move arbitrarily in a plane where the bearing member is located. An elastic rod and an SMA wire are used as one driving assembly, and the SMA wire expands or contracts to drive an end of the elastic rod to bend and deform, and the bending deformation of the end of the elastic rod generates displacement to drive the guide member or the bearing member to move. The end of the elastic rod generates larger bending deformation, which can increase a movement amount of the SMA wire, increase a stroke range of the driving apparatus, and improve anti-shake precision of the lens and optical performance of the camera module.

In a possible implementation, the camera module further includes a focusing assembly, where the focusing assembly includes a focusing coil and at least one magnetic member, the focusing coil is sleeved on an outer wall of the lens, a magnetic member is fixed in the housing, and the magnetic member is arranged opposite to the focusing coil.

According to a third aspect, this application provides an electronic device, including at least one camera module described above.

In the electronic device according to this application, a driving apparatus is arranged in the camera module to implement an anti-shake function of the camera module. The driving apparatus includes a bearing member and a driving structure, where the lens is fixed to the bearing member, and the driving structure includes a guide member, a fixing member, and the at least two groups of driving assemblies. At least one group of driving assemblies is arranged between the fixing member and the guide member, and at least one group of driving assemblies is arranged between the guide member and the bearing member, so that the driving assemblies between the fixing member and the guide member drive the guide member to move in a first direction, the driving assemblies between the guide member and the bearing member drive the bearing member to move in a second direction, and an included angle is formed between the first direction and the second direction to drive the lens to move arbitrarily in a plane where the bearing member is located. An elastic rod and an SMA wire are used as one driving assembly, and the SMA wire expands or contracts to drive an end of the elastic rod to bend and deform, and the bending deformation of the end of the elastic rod generates displacement to drive the guide member or the bearing member to move. The end of the elastic rod generates larger bending deformation, which can increase a movement amount of the SMA wire, increase a stroke range of the driving apparatus, improve anti-shake precision of the lens and optical performance of the camera module, and optimize service performance of the electronic device.

### BRIEF DESCRIPTION OF DRAWINGS

FIG. 1 is a diagram of a structure of an electronic device according to an embodiment of this application;
FIG. 2 is a partial exploded view of FIG. 1;
FIG. 3 is a diagram of a structure of a camera module according to an embodiment of this application;
FIG. 4 is an exploded view of FIG. 3;
FIG. 5 is a schematic diagram of an assembled structure of a focusing assembly and a lens according to an embodiment of this application;
FIG. 6 is a schematic diagram of a structure of a driving apparatus according to an embodiment of this application;
FIG. 7 is an exploded view of FIG. 6 in a front perspective;
FIG. 8 is a schematic diagram showing that a shape memory alloy wire drives an elastic rod to deform according to an embodiment of this application;
FIG. 9 is a schematic diagram showing assembling of a fixing member and a guide member according to an embodiment of this application;
FIG. 10 is a schematic diagram showing assembling of a guide member and a bearing member according to an embodiment of this application; and
FIG. 11 is an exploded view of FIG. 6 in a bottom perspective.

### DESCRIPTION OF EMBODIMENTS

Terms used in implementations of this application are only used to explain specific embodiments of this application, and are not intended to limit this application.

With continuous progress of science and technology, a photographing function has gradually become essential to a mobile terminal such as a mobile phone, a tablet computer, a notebook computer, a personal digital assistant (Personal Digital Assistant, PDA), a smart wearable device, or a point of sales (Point of Sales, POS).

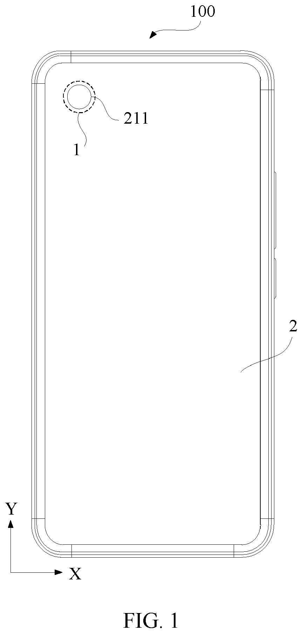

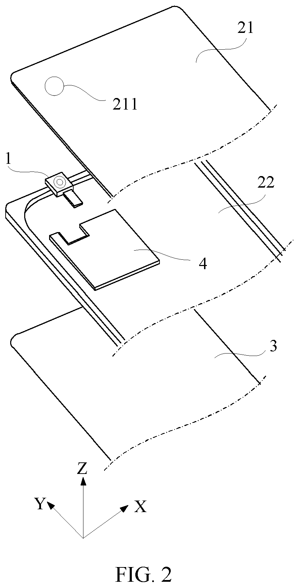

FIG. 1 is a schematic diagram of a structure of an electronic device according to an embodiment of this application; and FIG. 2 is a partial exploded view of FIG. 1. As shown in FIG. 1 and FIG. 2, a mobile phone is used as an example to describe an electronic device 100 according to this application. It should be understood that the electronic device 100 of this embodiment includes, but is not limited to, a mobile phone. The electronic device 100 may alternatively be a mobile terminal such as the tablet computer, the notebook computer, the PDA, the smart wearable device, or the POS described above.

As shown in FIG. 1 and FIG. 2, the electronic device 100 may include a housing 2, a display panel 3, a camera module 1, and a circuit board 4. The housing 2 is enclosed on a back surface and a side face of the electronic device 100, and the display panel 3 is mounted on the housing 2. The display panel 3 and the housing 2 enclose an accommodating space of the electronic device 100, and the camera module 1 and the circuit board 4 are mounted in the accommodating space. In addition, a device such as a microphone, a speaker, or a battery may be further arranged in the accommodating space.

FIG. 1 shows an area that is of the camera module 1 and that is located at the top of the housing 2 close to an edge. It can be understood that a position of the camera module 1 is not limited to the position shown in FIG. 1.

As shown in FIG. 2, in some embodiments, the housing 2 may include a back cover 21 and a middle frame 22. The back cover 21 is provided with a light-transmitting hole 211, the camera module 1 may be arranged on the middle frame 22, and the camera module 1 collects external ambient light through the light-transmitting hole 211 in the back cover 21. A light sensing surface of the camera module 1 is opposite to the light-transmitting hole 211, and external ambient light passes through the light-transmitting hole 211 to irradiate the light sensing surface. The light sensing surface is used to collect external ambient light. The camera module 1 is configured to convert an optical signal into an electrical signal to implement a photographing function thereof.

FIG. 2 shows that a camera module 1 is provided inside an electronic device 100. It should be noted that in actual application, a quantity of camera modules 1 is not limited to one, and the quantity of camera modules 1 may be two or more. When a plurality of camera modules 1 are provided, the plurality of camera modules 1 may be arbitrarily arranged in an X-Y plane. For example, a plurality of camera modules 1 are arranged in an X-axis direction, or a plurality of camera modules 1 are arranged in a Y-axis direction.

In addition, the camera module 1 includes, but is not limited to, an auto focus (Auto Focus, AF) module, a fix focus (Fix Focus, FF) module, a wide-angle camera module 1, a long-focus camera module 1, a color camera module 1, or a black-and-white camera module 1. The camera module 1 in the electronic device 100 may include any one of the foregoing camera modules 1, or include two or more of the foregoing camera modules 1. When two or more camera modules 1 are provided, the two or more camera modules 1 may be integrated into one camera assembly.

As shown in FIG. 2, the camera module 1 may be electrically connected to the circuit board 4. The circuit board 4 is, for example, a main board in the electronic device 100. In an implementation, the camera module 1 may be electrically connected to the main board by using an electrical connector. For example, the camera module 1 is provided with a female socket of the electrical connector, and the main board is provided with a male socket of the electrical connector. The female socket is inserted into the male socket, to electrically connect the camera module 1 to the main board. For example, the main board is provided with a processor, and the processor controls the camera module 1 to photograph an image. When a user inputs a photographing instruction, the processor receives the photographing instruction, and controls, based on the photographing instruction, the camera module 1 to photograph a photographed object.

The following describes a camera module 1 in an electronic device 100 according to an embodiment of this application.

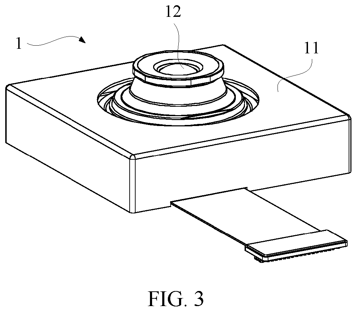

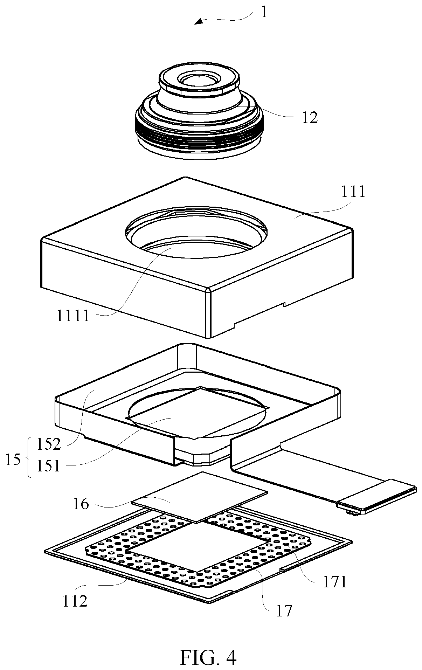

FIG. 3 is a schematic diagram of a structure of a camera module according to an embodiment of this application; and FIG. 4 is an exploded view of FIG. 3. As shown in FIG. 3, the camera module 1 of this embodiment includes a housing 11, a lens 12, a driving apparatus 13 (not shown in the figure), a focusing assembly 14, and an image sensor assembly 15.

Specifically, as shown in FIG. 4, the housing 11 may include an outer frame 111 and a bottom plate 112, and the outer frame 111 and the bottom plate 112 jointly enclose an accommodating space of the housing 11. Through the arrangement of the detachable bottom plate 112, the lens 12, the driving apparatus 13, the focusing assembly 14, the image sensor assembly 15, and other devices of the camera module 1 can be easily mounted in the housing 11.

A surface that is of a side of the outer frame 111 and that faces away from the bottom plate 112 is provided with a mounting hole 1111, the lens 12 is mounted in the housing 11, and a part of the lens 12 passes through the mounting hole 1111 and is exposed outside the housing 11. A light inlet side of the lens 12 is located outside the housing 11, and a light outlet side of the lens 12 is located inside the housing 11. For example, the light inlet side of the lens 12 corresponds to a light-transmitting hole 211 in a back cover of the electronic device 100. External ambient light enters the lens 12 from the light inlet side of the lens 12 through the light-transmitting hole 211. The lens 12 includes, for example, one or more stacked lenses. An optical axis of the lens 12 passes through a center of the lens, and the lens converges incident light, and converged light is emitted from the light outlet side of the lens 12.

The image sensor assembly 15 is located on a light outlet path of the lens 12. For example, the image sensor assembly 15 is located on the light outlet side of the lens 12, and the optical axis of the lens 12 passes through a center of the image sensor assembly 15. The light emitted from the lens 12 enters the image sensor assembly 15, and by using a photoelectric conversion function of the image sensor assembly 15, a signal of the emitted light is converted into an electrical signal, so as to implement an imaging function of the camera module 1.

Still referring to FIG. 4, the image sensor assembly 15 may be located at the bottom of the housing 11, that is, the image sensor assembly 15 is disposed close to the bottom plate 112. For example, the image sensor assembly 15 may be fixed to the bottom plate 112, and the bottom plate 112 supports and positions the image sensor assembly 15. Specifically, the image sensor assembly 15 may include an image sensor 151 and an electrical connecting member 152.

The image sensor 151 is located on the light outlet side of the lens 12, for example, the optical axis of the lens 12 passes through a center of the image sensor 151. The light emitted from the lens 12 irradiates the image sensor 151, and the image sensor 151 converts the signal of the emitted light into an electrical signal through photoelectric conversion, thereby implementing the imaging function of the camera module 1.

The electrical connecting member 152 is configured to electrically connect the image sensor 151 to an external circuit, and then control an image sensing operation by using the external circuit. Specifically, one end of the electrical connecting member 152 is connected to the image sensor 151, and the other end of the electrical connecting member 152 is connected to the external circuit. For example, the other end of the electrical connecting member 152 is connected to the circuit board 4 in the electronic device. When the user performs photographing, the processor on the circuit board 4 controls the image sensor 151 to operate.

It should be noted that because the image sensor assembly 15 of this embodiment may be fixed in the housing 11, in an example in which the image sensor assembly 15 is fixed to the bottom plate 112, a back surface of the image sensor 151 is fixed to the bottom plate 112. Because the image sensor 151 does not need to move, a flexible electrical connecting member may be used to electrically connect the image sensor 151 to the external circuit, or the electrical connecting member 152 with good strength and rigidity may be used to connect the image sensor 151 to the external circuit, for example, a printed circuit board (Printed Circuit Board, PCB) 4 is used to connect the image sensor 151 to the external circuit.

The image sensor 151 generates heat during operation, and the heat is collected on the image sensor 151, which may affect performance of the image sensor 151, or may make the image sensor 151 not operate normally in a severe case. Therefore, the image sensor 151 needs to undergo heat dissipation. Therefore, as shown in FIG. 4, a gap is formed between a heat dissipation surface of the image sensor 151 (a surface that is a side of the image sensor 151 and that faces the bottom plate 112) and the bottom plate 112, the gap is filled with a heat transfer fluid 16, and the heat transfer fluid 16 dissipates heat from the image sensor 151. Through heat conduction of the heat transfer fluid 16, heat dissipation efficiency of the image sensor 151 can be improved, and the heat dissipation effect of the image sensor 151 can be improved, thereby ensuring operating performance of the image sensor 151.

In addition, an annular sealing plate 17 is attached to the bottom plate 112 of the housing 11, and the heat transfer fluid 16 is located in an area enclosed by the annular sealing plate 17. The heat transfer fluid 16 is a flowable liquid, and the annular sealing plate 17 is arranged on the bottom plate 112 of the housing 11, so that the heat transfer fluid 16 is confined in the area enclosed by the annular sealing plate 17. The area enclosed by the annular sealing plate 17 may correspond to the heat dissipation surface of the image sensor 151.

A gap may be formed between the annular sealing plate 17 and the heat dissipation surface of the image sensor 151, to ensure that the heat transfer fluid 16 is in full contact with the heat dissipation surface of the image sensor 151, and reserve a certain flow space for the heat transfer fluid 16 to expand when heated. In addition, through surface tension of the heat transfer fluid 16 in the gap between a surface of the annular sealing plate 17 and the heat dissipation surface of the image sensor 151, the heat transfer fluid 16 can be prevented from overflowing from the annular sealing plate 17.

Still referring to FIG. 4, a plurality of sealing holes 171 may be spaced apart in the annular sealing plate 17, and the overflowing heat transfer fluid 16 is sealed and stored by using the sealing holes 171, so that the heat transfer fluid 16 can be prevented from overflowing out of the annular sealing plate 17. The surface of the annular sealing plate 17, which may be used as an alternative to the sealing holes 171, may be an uneven corrugated surface, and an extension direction of corrugations of the corrugated surface may be consistent with an extension direction of each side edge of the annular sealing plate 17; or a plurality of elongated grooves may be spaced apart in the surface of the annular sealing plate 17, and the elongated grooves extend in a direction of a contour line of the annular sealing plate 17.

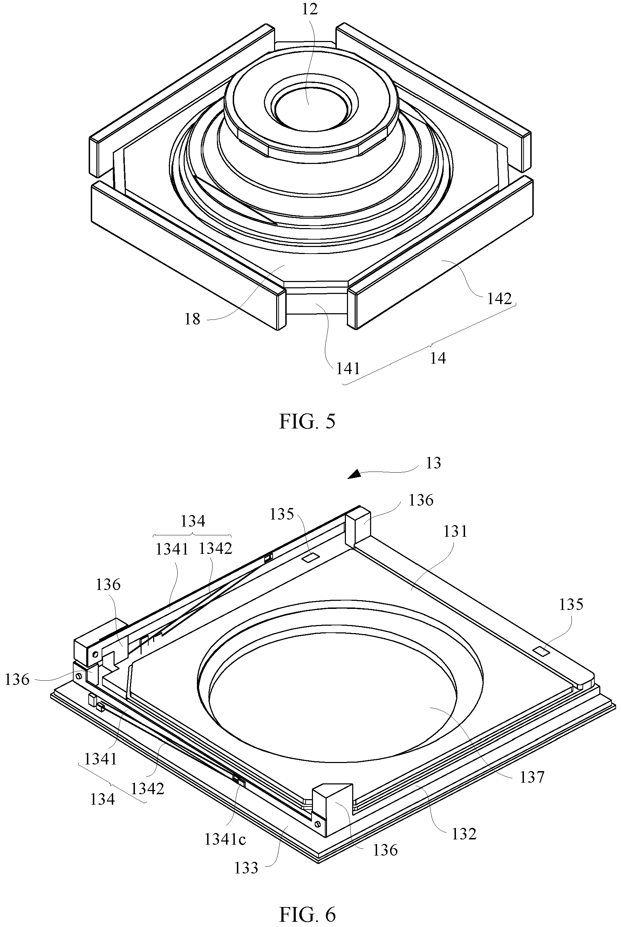

The focusing assembly 14 arranged in the housing 11 is configured to adjust a focal length of the lens 12. For example, the focusing assembly 14 may drive the lens 12 to move along an optical axis of the lens 12 to implement a focusing function of the lens 12. FIG. 5 is a schematic diagram of an assembled structure of a focusing assembly 14 and a lens 12 according to an embodiment of this application. As shown in FIG. 5, in an implementation, the focusing assembly 14 may include a focusing coil 141 and a magnetic member 142, where the focusing coil 141 is sleeved on an outer wall of the lens 12, the magnetic member 142 is fixed in the housing 11, and the magnetic member 142 is arranged opposite to the focusing coil 141.

In actual application, the magnetic member 142 may be fixed to an inner wall of the housing 11, for example, the magnetic member 142 is fixed to an inner side wall that is of the housing 11 and that is opposite to an outer side wall of the lens 12; or a fixing structure is arranged in the housing 11, the magnetic member 142 is fixed to the fixing structure, and the magnetic member 142 faces the focusing coil 141 on the outer side wall of the lens 12.

When the user holds an electronic device for photographing, the circuit board 4 controls the focusing coil 141 to operate, the focusing coil 141 is energized to generate an electromagnetic field, and a magnetic force is generated between the focusing coil 141 and the magnetic member142. The magnetic force drives the focusing coil 141 to move, and the focusing coil 141 drives the lens 12 to move. For example, the circuit board 4 controls a direction and magnitude of a current in the focusing coil 141 based on a photographing instruction inputted by the user, adjusts a direction and magnitude of the magnetic field generated between the focusing coil 141 and the magnetic member 142, and controls a moving direction and movement amount of the focusing coil 141, so as to control a moving direction and movement amount of the lens 12 to focus on a photographed object.

To ensure that the focusing assembly 14 stably drives the lens 12 to move, a plurality of magnetic members 142 may be spaced apart on a periphery of the focusing coil 141 along a circumference of the focusing coil 141. For example, two opposite sides of the focusing coil 141 each are provided with one magnetic member 142; or four, six, or eight magnetic members 142 are evenly spaced apart along the circumference of the focusing coil 141.

For example, the outer side wall of the lens 12 may be sleeved with a support seat 18, and the focusing coil 141 is sleeved on an outer wall of the support seat 18. The support seat 18 supports the lens 12 and fixes the focusing coil 141.

When the user holds a portable electronic device (such as a mobile phone) for photographing, a photographed image is often blurred because of hand shaking. In view of this, a driving apparatus 13 is arranged in the housing 11 of the camera module 1, and the driving apparatus 13 is configured to drive the lens 12 to move in a plane perpendicular to a direction of an optical axis of the lens 12, for example, the driving apparatus 13 drives the lens 12 to translate or rotate in this plane. The lens 12 moves in the plane perpendicular to the optical axis of the lens 12, to compensate for displacement caused by the shaking of the user's hand, thereby improving photographing quality.

In a related technology, there is a manner of using a conventional elastic piece type voice coil motor as a driving apparatus. However, due to an edge effect of an electromagnetic force, the motor is prone to an insufficient edge driving force when its stroke is large, and excessive displacement of an elastic piece easily leads to a risk of fatigue fracture. There is also a manner of using a shape memory alloy wire to drive the lens to move. However, due to physical properties of the shape memory alloy wire, a range of a driving stroke is usually only meet about 0.1 mm. Further, there is a manner of using a lifting ring wire structure as a driving apparatus. However, due to a lateral K value (heat transfer coefficient) limitation of the lifting ring wire, the current stroke range can only reach 0.1 mm.

In view of this, by using expansion and contraction characteristics of the shape memory alloy wire, the driving apparatus 13 in the camera module 1 of this embodiment drives an elastic rod 1341 to deform, and displacement caused by deformation of the elastic rod 1341 drives the lens 12 to move, and displacement caused by bending deformation of the elastic rod 1341 is large, so that the stroke range of the driving apparatus 13 and a moving range of the lens 12 can be increased, and optical performance of the camera module 1 can be improved.

The driving apparatus 13 in the camera module 1 will be described in detail below.

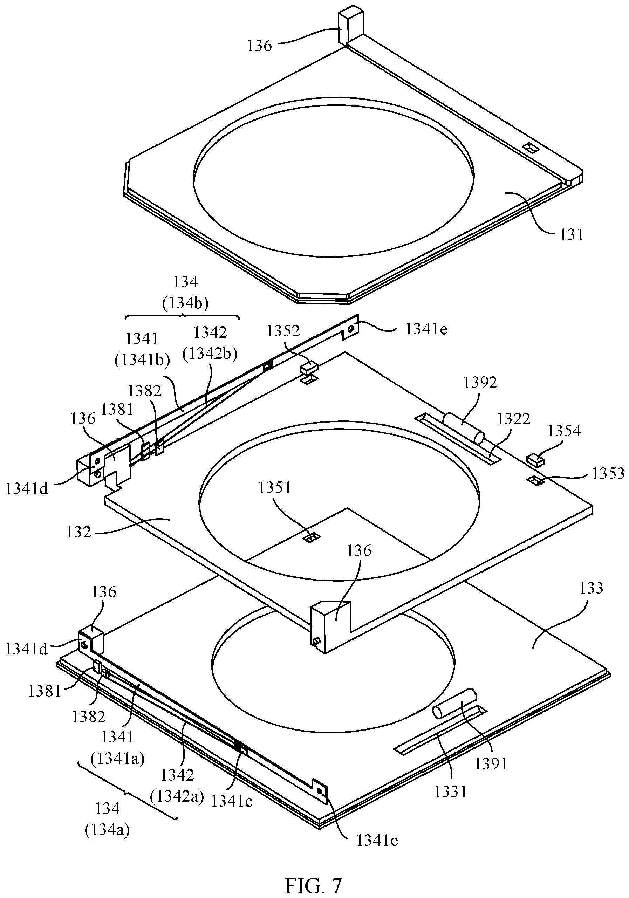

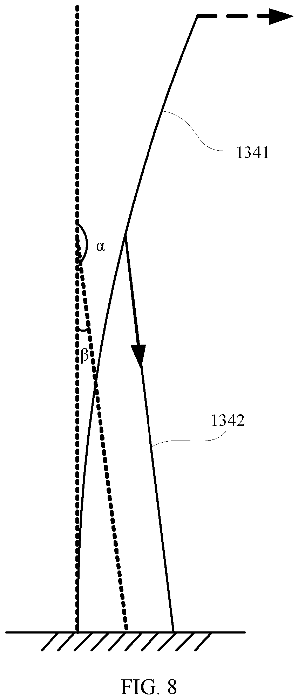

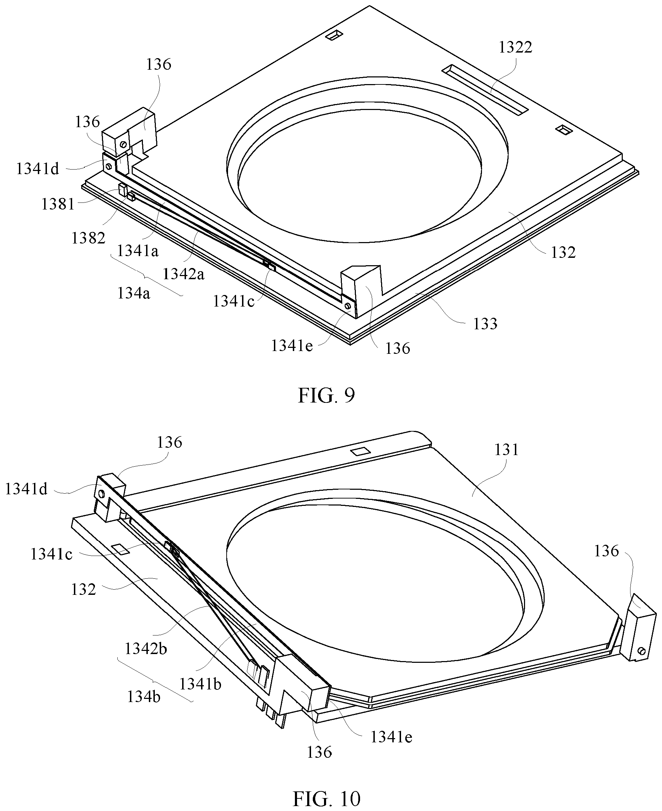

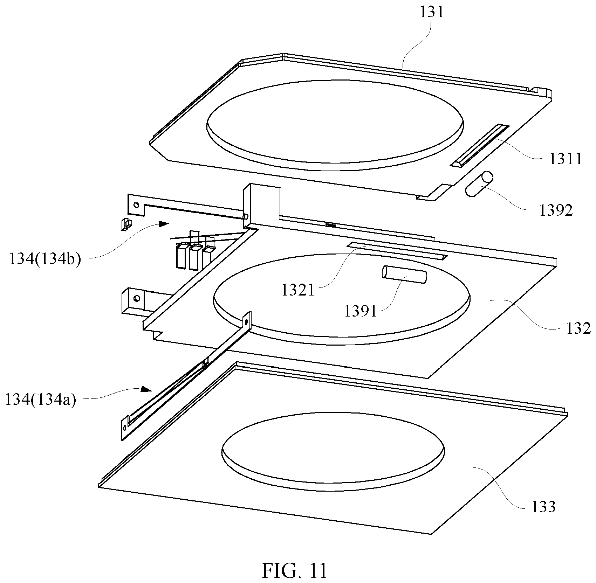

FIG. 6 is a schematic diagram of a structure of a driving apparatus 13 according to an embodiment of this application; FIG. 7 is an exploded view of FIG. 6 in a front perspective; FIG. 8 is a schematic diagram showing that a shape memory alloy wire drives an elastic rod 1341 to deform according to an embodiment of this application; FIG. 9 is a schematic diagram showing assembling of a fixing member 133 and a guide member 132 according to an embodiment of this application; FIG. 10 is a schematic diagram showing assembling of a guide member 132 and a bearing member 131 according to an embodiment of this application; and FIG. 11 is an exploded view of FIG. 6 in a bottom perspective.

As shown in FIG. 6, the driving apparatus 13 includes a bearing member 131 and a driving structure (not shown in the figure). The bearing member 131 is configured to carry the lens 12. As shown in FIG. 5, the lens 12 is fixed to the bearing member 131. For example, an edge part of a light outlet side of the lens 12 is fixed to a front surface of the bearing member 131. For example, a bottom end of the focusing coil 141 may also be connected and fixed to the front surface of the bearing member 131, to fix the focusing coil 141 reliably. The driving structure is movably connected to a back surface of the bearing member 131, and the driving structure is configured to drive the bearing member 131 to move in a plane where the bearing member 131 is located. For example, the driving structure drives the bearing member 131 to translate or rotate in the plane where the bearing member 131 is located, and the bearing member 131 drives the lens 12 to translate or rotate in a horizontal space where the lens 12 is located, so as to implement an anti-shake function of the lens 12.

It should be noted that, in this embodiment, a surface that is of a side of the bearing member 131 and that faces the lens 12 is defined as the front surface of the bearing member 131, and a surface (surface of the other side opposite to the front surface) that is of a side of the bearing member 131 and that faces the driving structure is defined as the back surface of the bearing member 131. Details are not described herein again.

As shown in FIG. 7, specifically, the driving structure includes a guide member 132, a fixing member 133, and a driving assembly 134. The guide member 132 and the fixing member 133 are sequentially stacked on the back surface of the bearing member 131, and the fixing member 133 is fixed in the housing 11. The guide member 132 can move in a plane where the guide member 132 is located, the bearing member 131 can move in a plane where the bearing member 131 is located, and the bearing member 131 and the guide member 132 can move relative to each other. In this way, the bearing member 131 can drive the lens 12 to move arbitrarily in the plane perpendicular to the direction of the optical axis of the lens 12.

A gap may be formed between the fixing member 133 and the guide member 132, and a gap is formed between the guide member 132 and the bearing member 131. In this way, the guide member 132 is less or not obstructed when moving relative to the fixing member 133, and the bearing member 131 is less or not obstructed when moving relative to the guide member 132, thereby ensuring steady and smooth movement of the guide member 132 and the bearing member 131.

At least two groups of driving assemblies 134 are provided. At least one group of driving assemblies 134 is connected between the fixing member 133 and the guide member 132, and the driving assemblies 134 between the fixing member 133 and the guide member 132 are configured to drive the guide member 132 to move in a plane where the guide member 132 is located, and the guide member 132 can move in a first direction. At least one group of driving assemblies 134 is connected between the guide member 132 and the bearing member 131, and the driving assemblies 134 between the guide member 132 and the bearing member 131 are configured to drive the bearing member 131 to move in a plane where the bearing member 131 is located, and the bearing member 131 can move in a second direction.

For example, when the guide member 132 and the bearing member 131 are at an original position, axes of the fixing member 133, the guide member 132, and the bearing member 131 coincide, and the axes of the fixing member 133, the guide member 132, and the bearing member 131 may coincide with an axis of the lens 12. With the original position of the guide member 132 and the bearing member 131 as an initial position of the lens 12, a moving direction and movement amount of the guide member 132 and the bearing member 131 are controlled based on a shaking direction and shaking amount of the user's hand, so as to offset the movement amount of the hand shaking and ensure the anti-shake effect of the driving apparatus 13.

Specifically, based on the shaking direction and shaking amount of the user's hand, the guide member 132 and the bearing member 131 are controlled to move in an opposite direction for a corresponding distance. For example, the bearing member 131 is fixed relative to the guide member 132, and the guide member 132 drives the bearing member 131 to move in the first direction; or the guide member 132 is fixed relative to the fixing member 133, and the bearing member 131 moves in the second direction; or the guide member 132 moves in the first direction relative to the fixing member 133, and the bearing member 131 moves in the second direction relative to the guide member 132.

It should be noted that an included angle is formed between the first direction and the second direction, so that by moving the guide member 132 in the first direction for a certain distance, the bearing member 131 moves in the second direction for a certain distance based on the movement of the guide member 132, and the lens 12 can move arbitrarily in a plane perpendicular to an axial direction of the lens 12.

In actual application, the shaking direction and the shaking amount of the user's hand shaking in this direction can be easily decomposed into two moving components in two directions perpendicular to each other. Therefore, in an implementation, the first direction in which the guide member 132 moves and the second direction in which the bearing member 131 moves may be perpendicular to each other. In this way, the movement of the guide member 132 and the bearing member 131 can be easily controlled, and anti-shake precision of the driving apparatus 13 can be improved. For example, the first direction in which the guide member 132 moves is an X direction shown in FIG. 2, and the second direction in which the bearing member 131 moves is a Y direction shown in FIG. 2.

In addition, the first direction includes a positive direction and a negative direction. In an example in which the first direction is the X direction shown in FIG. 2, the guide member 132 may move in the X direction or in an -X direction. The second direction includes a positive direction and a negative direction. In an example in which the second direction is the Y direction shown in FIG. 2, the bearing member 131 may move in the Y direction or a -Y direction.

As shown in FIG. 7, each driving assembly 134 includes an elastic rod 1341 and a shape memory alloy wire, that is, at least one group of elastic rods 1341 and shape memory alloy wires are connected between the fixing member 133 and the guide member 132, and at least one group of elastic rods 1341 and shape memory alloy wires are connected between the guide member 132 and the bearing member 131. When the lens 12 needs to compensate for the shaking of the user's hand, by changing an expansion and contraction state of each shape memory alloy wire, the elastic rod 1341 is driven to bend and deform, and displacement caused by the bending deformation of the elastic rod 1341 drives the guide member 132 or the bearing member 131 to move.

It should be noted that shape memory alloys (Shape Memory Alloys, SMAs) each are an alloy material that can completely eliminate its deformation at a lower temperature after heating and restore its original shape before deformation, that is, an alloy with a "memory" effect. The SMA is a thermoelastic martensitic phase change material, which can undergo a phase change when the temperature changes, so that a stress state also changes. When at a low temperature, the SMA is in a martensite phase state; and when the temperature rises, the SMA is transformed from the martensite phase to an austenite phase, and deformation contraction occurs.

Therefore, a current may be led to a shape memory alloy wire (hereinafter referred to as an SMA wire), and the SMA wire 1342 is heated by using a heating effect of the current, to implement contraction deformation of the SMA wire 1342. When no current flows in the SMA wire 1342, the SMA wire 1342 can be restored to its original state. In this way, the expansion-contraction deformation of the SMA wire 1342 when a power-on state changes can drive the elastic rod 1341 to bend and deform, and a bent and deformed end of the elastic rod 1341 is displaced, thereby driving the guide member 132 or the bearing member 131 to move.

For the driving assemblies 134 connected between the fixing member 133 and the guide member 132 and the driving assemblies 134 connected between the guide member 132 and the bearing member 131, in this embodiment, one end of the elastic rod 1341 is defined as a fixed end 1341d, and the other end of the elastic rod 1341 is defined as a moving end 1341e. The SMA wire 1342 drives the moving end 1341e of the elastic rod 1341 to generate large bending deformation, and the moving end 1341e of the elastic rod 1341 drives the guide member 132 or the bearing member 131 to move.

Using the elastic rod 1341 connected between the fixing member 133 and the guide member 132 as an example, one end that is of the elastic rod 1341 and that is connected to the fixing member 133 is a fixed end 1341d of the elastic rod 1341, the other end that is of the elastic rod 1341 and that is connected to the guide member 132 is a moving end 1341e of the elastic rod 1341, and the moving end 1341e of the elastic rod 1341 drives the guide member 132 to move in the first direction. Using the elastic rod 1341 connected between the guide member 132 and the bearing member 131 as an example, one end that is of the elastic rod 1341 and that is connected to the guide member 132 is a fixed end 1341d of the elastic rod 1341, and the other end that is of the elastic rod 1341 and that is connected to the bearing member 131 is a moving end 1341e of the elastic rod 1341, and the moving end 1341e of the elastic rod 1341 drives the bearing member 131 to move in the second direction.

As shown in FIG. 8, in an example in which the elastic rod 1341 is in a natural state when no current is led into the SMA wire 1342, when a current is led into the SMA wire 1342, the SMA wire 1342 contracts, and the SMA wire 1342 pulls the elastic rod 1341, so that the moving end 1341e of the elastic rod 1341 undergoes large bending deformation. A direction of displacement of the moving end 1341e of the elastic rod 1341 caused by bending deformation is approximately perpendicular to an extension direction of the elastic rod 1341 in the natural state.

In this way, the SMA wire 1342 generates small contraction displacement in the extension direction of the SMA wire 1342, which can drive the moving end 1341e of the elastic rod 1341 to generate large bending deformation. The moving end 1341e of the elastic rod 1341 generates large displacement relative to the fixed end 1341d of the elastic rod 1341, and the moving end 1341e of the elastic rod 1341 can drive the guide member 132 or the bearing member 131 to generate large displacement in a direction approximately the same the moving direction of the guide member 132 or the bearing member 131.

The SMA wire 1342 and the elastic rod 1341 are arranged as one driving assembly 134, the contraction of the SMA wire 1342 drives the moving end 1341e of the elastic rod 1341 to generate large bending deformation, and the bending deformation of the moving end 1341e of the elastic rod 1341 may drive the guide member 132 or the bearing member 131 to generate large displacement. In this way, the contraction displacement of the SMA wire 1342 can be increased by the bending deformation of the elastic rod 1341. The displacement generated when the bending deformation of the elastic rod 1341 drives the guide member 132 or the bearing member 131 can reach several times that generated when the contraction of the SMA wire 1342 drives the guide member 132 or the bearing member 131 to move.

Therefore, the driving apparatus 13 in this embodiment drives, by using the SMA wire 1342, the elastic rod 1341 to bend and deform, to drive the guide member 132 and the bearing member 131 to move, which can increase the moving range of the guide member 132 and the bearing member 131, further increase the stroke range of the driving apparatus 13, meet requirements for large-stroke driving, increase the moving range of the lens 12 in the plane perpendicular to the direction of the optical axis of the lens 12, and improve anti-shake precision of the lens 12 and optical performance of the camera module 1.

Still referring to FIG. 7, in a specific implementation, a group of driving assemblies 134 is connected between the fixing member 133 and the guide member 132, and a driving assembly 134 connected between the fixing member 133 and the guide member 132 is defined as a first driving assembly 134a. The first driving assembly 134a includes a first elastic rod 1341a and a first SMA wire 1342a, where a fixed end 1341d of the first elastic rod 1341a is connected to the fixing member 133, a moving end 1341e of the first elastic rod 1341a is connected to the guide member 132, and the first SMA wire 1342a is connected between the fixing member 133 and the first elastic rod 1341a.

A group of driving assemblies 134 is connected between the guide member 132 and the bearing member 131, and a driving assembly 134 connected between the guide member 132 and the bearing member 131 is defined as a second driving assembly 134b. The second driving assembly 134b includes a second elastic rod 1341b and a second SMA wire 1342b, where a fixed end 1341d of the second elastic rod 1341b is connected to the guide member 132, a moving end 1341e of the second elastic rod 1341b is connected to the bearing member 131, and the second SMA wire 1342b is connected between the guide member 132 and the second elastic rod 1341b.

In addition, using the fixing member 133 as reference, the first driving assembly 134a and the second driving assembly 134b may be located on different sides of the fixing member 133 respectively, and the first driving assembly 134a and the second driving assembly 134b are staggered. In this way, the first elastic rod 1341a and the second elastic rod 1341b are located on different sides of the fixing member 133 respectively, the first elastic rod 1341a and the second elastic rod 1341b are staggered, and a direction of displacement caused by bending deformation of the first elastic rod 1341a and a direction of displacement caused by bending deformation of the second elastic rod 1341b are staggered, so that the first elastic rod 1341a drives the guide member 132, and the second elastic rod 1341b drives the bearing member 131, to move in the first direction and the second direction that are staggered, respectively.

Using the driving assembly 134 shown in FIG. 6 as an example, the first driving assembly 134a and the second driving assembly 134b may be located on two adjacent sides of the fixing member 133 respectively. For example, an outer contour of the fixing member 133 may be rectangular, the first driving assembly 134a and the second driving assembly 134b are both arranged close to an outer edge of the fixing member 133, and the first driving assembly 134a and the second driving assembly 134b are located on the two adjacent sides of the fixing member 133 respectively.

As shown in FIG. 7, the elastic rod 1341 may extend along a side wall of the fixing member 133. Still using the rectangular outer contour of the fixing member 133 as an example, the elastic rod 1341 extends along the side wall of the fixing member 133, and the first elastic rod 1341a and the second elastic rod 1341b located on two adjacent sides of the fixing member 133 are perpendicular to each other. Because a direction of bending deformation of the first elastic rod 1341a and a direction of bending deformation of the second elastic rod 1341b are both roughly perpendicular to extension directions of the first elastic rod 1341a and the second elastic rod 1341b, the direction of bending deformation of the first elastic rod 1341a is perpendicular to that of bending deformation of the second elastic rod 1341b, and the moving direction of the guide member 132 is perpendicular to the moving direction of the bearing member 131.

In addition, the deformed end of the elastic rod 1341, that is, the moving end 1341e of the elastic rod 1341, may be connected to a corner of the guide member 132 or a corner of the bearing member 131. For example, the moving end 1341e of the first elastic rod 1341a is connected to the corner of the guide member 132, and the moving end 1341e of the second elastic rod 1341b is connected to the corner of the bearing member 131.

Using the connection between the moving end 1341e of the first elastic rod 1341a and the guide member 132 as an example, application of an acting force to the corner of the guide member 132 more easily drives the guide member 132 to move, and by connecting the moving end 1341e of the first elastic rod 1341a to the corner of the guide member 132, the first elastic rod 1341a easily drives the guide member 132 to move. Similarly, by connecting the moving end 1341e of the second elastic rod 1341b to the corner of the bearing member 131, the second elastic rod 1341b easily drives the bearing member 131 to move. In this way, flexibility of the driving apparatus 13 can be improved.

Specifically, as shown in FIG. 7, two ends of the elastic rod 1341 may extend to two ends of the side wall of the fixing member 133 respectively, so as to increase a length of the elastic rod 1341. In an example in which the elastic rod 1341 is an elastic steel piece, for example, the elastic rod 1341 is a steel piece, and a larger length of the elastic rod 1341 indicates better elasticity of the elastic rod 1341 and a larger elastic deformation degree of the moving end 1341e of the elastic rod 1341. On the contrary, if the elastic rod 1341 has an excessively small length, the elastic rod 1341 has higher rigidity, the elastic deformation degree of the elastic rod 1341 is reduced, and a stroke of the driving apparatus 13 is not greatly increased.

As shown in FIG. 9 and FIG. 10, fixing structures may be provided at corners of the fixing member 133, the guide member 132, and the bearing member 131, and the fixed end 1341d and the moving end 1341e of the elastic rod 1341 are fixed by the fixing structures. For example, corresponding corners that are of the fixing member 133, the guide member 132, and the bearing member 131 and that need to be connected to the end of the elastic rod 1341 are provided with fixing posts 136. The fixing posts 136 extend out to surfaces of the fixing member 133, the guide member 132, and the bearing member 131, and the end of the elastic rod 1341 is connected to side walls of the fixing posts 136. The fixing posts 136 may be integrally formed on the fixing member 133, the guide member 132, and the bearing member 131.

Still as shown in FIG. 9 and FIG. 10, in an implementation, the SMA wire 1342 is connected to a middle portion of the elastic rod 1341 in a length direction. For example, a connecting portion 1341c is arranged between two ends of the elastic rod 1341, and the SMA wire 1342 is connected to the connecting portion 1341c of the elastic rod 1341. By connecting the SMA wire 1342 to the middle portion of the elastic rod 1341, the SMA wire 1342 pulls the connecting portion 1341c of the elastic rod 1341 to move toward a side of the elastic rod 1341, and drives the entire elastic rod 1341 to bend and deform toward the side of the elastic rod 1341.

Because an action point of tension of the SMA wire 1342 is located on the middle portion of elastic rod 1341, a part where the connecting portion 1341c of the elastic rod 1341 is located undergoes certain displacement, and the displacement is determined by an acting force generated by the contraction of the SMA wire 1342. The connecting portion 1341c of the elastic rod 1341 drives the moving end 1341e of the elastic rod 1341 to generate larger bending deformation, and displacement caused by the bending deformation of the moving end 1341e of the elastic rod 1341 is larger, so that the movement amount of the SMA wire 1342 can be increased, and the driving stroke of the driving apparatus 13 is increased.

At the connecting portion 1341c of the elastic rod 1341, the SMA wire 1342 may be close to the moving end 1341e or the fixed end 1341d of the elastic rod 1341; that is, the connecting portion 1341c on the elastic rod 1341 may be close to the moving end 1341e of the elastic rod 1341, or the connecting portion 1341c may be close to the fixed end 1341d of the elastic rod 1341.

Still as shown in FIG. 9 and FIG. 10, if the SMA wire 1342 is connected to a part that is on the elastic rod 1341 and that is close to the moving end 1341e, the SMA wire 1342 can more easily pull the elastic rod 1341 and more easily drive the elastic rod 1341 to bend and deform. If the SMA wire 1342 is connected to a part that is on the elastic rod 1341 and that is close to the fixed end 1341d, the SMA wire 1342 drives the moving end 1341e of the elastic rod 1341 to generate larger bending deformation, and the elastic rod 1341 increases the movement amount of the SMA wire 1342 to a greater extent.

In actual application, the SMA wire 1342 may alternatively be connected to the moving end 1341e of the elastic rod 1341. In this way, the movement amount generated by bending deformation of the moving end 1341e of the elastic rod 1341 can meet a use requirement, and can effectively increase the movement amount generated by the contraction of the SMA wire 1342. For example, based on actual requirements, the connecting portion 1341c may be arranged at different parts between the two ends of the elastic rod 1341, the SMA wire 1342 may be connected at different parts between the two ends of the elastic rod 1341, and the movement amount caused by the bending deformation of the moving end 1341e of the elastic rod 1341 may reach 6-10 times that caused by the contraction of the SMA wire 1342.

As shown in FIG. 9 and FIG. 10, in this embodiment, the SMA wire 1342 may be in a folded and wound form, a middle section of the SMA wire 1342 is connected to the connecting portion 1341c of the elastic rod 1341, and two ends of the SMA wire 1342 are located on a same side of the connecting portion 1341c. When the SMA wire 1342 is connected to the elastic rod 1341, the SMA wire 1342 extends from an end of the elastic rod 1341 to the connecting portion 1341c of the elastic rod 1341, and the SMA wire 1342 bypasses the connecting portion 1341c and then extends in an opposite direction.

The SMA wire 1342 passes across the connecting portion 1341c of the elastic rod 1341 and then is wound and folded. When the SMA wire 1342 is energized and contract, two sections of the wound and folded SMA wire 1342 contract. Because the two wound sections of SMA wires 1342 are located on the same side of the connecting portion 1341c of the elastic rod 1341, tension generated by the contraction of the two sections of SMA wires 1342 on the connecting portion 1341c of the elastic rod 1341 is toward the same side of the connecting portion 1341c, which is equivalent to simultaneous action of two SMA wires 1342, thereby generating a double acting force on the elastic rod 1341.

In this case, the two wound sections of SMA wires 1342 simultaneously contract in the direction of the same side of the connecting portion 1341c of the elastic rod 1341, so that the contraction displacement of the SMA wires 1342 is increased, and the acting force of the SMA wires 1342 on the elastic rod 1341 is doubled. This can provide a double driving force to the elastic rod 1341, increase the bending deformation degree of the moving end 1341e of the elastic rod 1341, and increase the displacement of the moving end 1341e of the elastic rod 1341, thereby increasing the stroke range of the driving apparatus 13 and improving anti-shake precision of the lens 12 and optical performance of the camera module 1.

In addition, as shown in FIG. 8, an included angle α between the SMA wire 1342 and the deformed end of the elastic rod 1341 may be greater than 90°; that is, the included angle α between the SMA wire 1342 and the moving end 1341e of the elastic rod 1341 may be greater than 90°, and an included angle β between the SMA wire 1342 and the fixed end 1341d of the elastic rod 1341 may be less than 90°. By fixing the SMA wire 1342 to a side of the fixed end 1341d of the elastic rod 1341, the SMA wire 1342 is inclined toward the fixed end 1341d of the elastic rod 1341, and the tension of the SMA wire 1342 on the connecting portion 1341c of the elastic rod 1341 is biased toward the fixed end 1341d of the elastic rod 1341, so that the SMA wire 1342 easily drives the elastic rod 1341 to bend and deform, and the SMA wire 1342 can drive the moving end 1341e of the elastic rod 1341 to generate larger displacement.

In actual application, the included angle β between the SMA wire 1342 and the fixed end 1341d of the elastic rod 1341 may be less than 60°. For example, the included angle β between the SMA wire 1342 and the fixed end 1341d of the elastic rod 1341 is less than 30°. As described above, the elastic rod 1341 may be arranged close to an edge of the fixing member 133. Because the guide member 132 and the bearing member 131 may translate or rotate relative to the fixing member 133, to prevent the SMA wire 1342 from obstructing the movement of the guide member 132 and the bearing member 131, the SMA wire 1342 may be located outside edges of the guide member 132 and the bearing member 131. In this case, a small included angle between the SMA wire 1342 and the elastic rod 1341 indicates a smaller space occupied by the SMA wire 1342 and the elastic rod 1341, thereby saving a space in the housing 11 of the camera module 1 and reducing the volume of the camera module 1.

Still as shown in FIG. 9 and FIG. 10, the fixing member 133 and the guide member 132 each may be provided with a first conductive portion 1381 and a second conductive portion 1382, the SMA wire 1342 is fixed by the first conductive portion 1381 and the second conductive portion 1382, and a current is led into the SMA wire 1342. One end of the SMA wire 1342 is fixed to the first conductive portion 1381, and the other end of the SMA wire 1342 is fixed to the second conductive portion 1382.

The first conductive portion 1381 and the second conductive portion 1382 are both connected to an external circuit. For example, the first conductive portion 1381 and the second conductive portion 1382 are both connected to a circuit board 4. One of the first conductive portion 1381 and the second conductive portion 1382 is connected to a positive electrode of the external circuit, the other is connected to a negative electrode of the external circuit, and a current flows from one end to the other end of the SMA wire 1342.

It can be understood that the first conductive portion 1381 and the second conductive portion 1382 should be spaced apart to prevent short circuit of the current and damage to SMA wire 1342. In an implementation, the first conductive portion 1381 and the second conductive portion 1382 may be spaced apart along the side wall of the fixing member 133, and a line that connects the first conductive portion 1381 to the second conductive portion 1382 is parallel to the side wall of the fixing member 133. In this way, a distance between the first conductive portion 1381 and the elastic rod 1341 and a distance between the second conductive portion 1382 and the elastic rod 1341 are equal, and the two folded and wound sections of SMA wires 1342 form the same included angle with the elastic rod 1341.

By making the included angles between the two sections of SMA wires 1342 and the elastic rod 1341 the same, when the SMA wires 1342 are energized and contract, directions of acting forces of the two sections of SMA wires 1342 on the elastic rod 1341 form the same included angle with the elastic rod 1341, and magnitudes and directions of the acting forces generated in the two sections of SMA wires 1342 are roughly the same, so that the SMA wires 1342 have better balance when contracting, thereby improving control precision of the bending deformation of the elastic rod 1341. In addition, the service life of the SMA wires 1342 can be prolonged.

In actual application, a shaking signal of the user's hand shaking is usually detected based on the electronic device. For example, an acceleration sensor is arranged in the electronic device, the acceleration sensor detects a shaking direction and shaking amount of the user's hand during photographing and transmits the shaking signal to a processor in the circuit board 4. The processor determines, based on the shaking signal, a moving direction and movement amount which the lens 12 needs to compensate for, controls a direction and magnitude of a current in the first SMA wire 1342a and the second SMA wire 1342b, adjusts contraction amounts of the first SMA wire 1342a and the second SMA wire 1342b, and controls movement amounts of the first elastic rod 1341a and the second elastic rod 1341b, so as to control movement amounts of the guide member 132 and the bearing member 131, and the bearing member 131 drives the lens 12 to move, so as to compensate for the interference of the user's hand shaking during photographing, and improve image blurring and image quality.

However, by adjusting the magnitude of the current led into the SMA wire 1342, the SMA wire 1342 is controlled to contract to produce a specific movement amount, and precision in adjusting expansion and contraction of the SMA wire 1342 is limited, so that the precision of the driving apparatus 13 is not ideal. Therefore, in this embodiment, the driving apparatus 13 further includes a first displacement detection assembly and a second displacement detection assembly, where the first displacement detection assembly detects displacement of the guide member 132 relative to the fixing member 133 in the first direction, and the second displacement detection assembly detects displacement of the bearing member 131 relative to the guide member 132 in the second direction.

Specifically, as shown in FIG. 7, the first displacement detection assembly includes a first Hall sensor 1351 and a first magnetic block 1352, where the first Hall sensor 1351 is arranged on one of the fixing member 133 and the guide member 132, the first magnetic block 1352 is arranged on the other of the fixing member 133 and the guide member 132, and the first Hall sensor 1351 and the first magnetic block 1352 are arranged opposite to each other.

In actual application, when the driving apparatus 13 is not in operation, that is, when the guide member 132 is in an initial position and does not move relative to the fixing member 133, the first magnetic block 1352 and the first Hall sensor 1351 may face each other. In an example in which the first Hall sensor 1351 is arranged on the fixing member 133 and the first magnetic block 1352 is arranged on the guide member 132, the first magnetic block 1352 generates a magnetic field around the first Hall sensor 1351. When the guide member 132 moves in the first direction, the first magnetic block 1352 moves in the first direction relative to the first Hall sensor 1351, a magnetic field intensity on a surface of the first Hall sensor 1351 changes, and the first Hall sensor 1351 senses displacement of the first magnetic block 1352 based on the change of the magnetic field intensity, so as to detect the displacement of the guide member 132 relative to the fixing member 133.

The second displacement detection assembly includes a second Hall sensor 1353 and a second magnetic block 1354, where the second Hall sensor 1353 is arranged on one of the guide member 132 and the bearing member 131, the second magnetic block 1354 is arranged on the other of the guide member 132 and the bearing member 131, and the second Hall sensor 1353 and the second magnetic block 1354 are arranged opposite to each other.

Similar to the first Hall sensor 1351 and the first magnetic block 1352, the second magnetic block 1354 and the second Hall sensor 1353 may face each other when the guide member 132 and the bearing member 131 each are at an initial position. In an example in which the second Hall sensor 1353 is arranged on the guide member 132 and the second magnetic block 1354 is arranged on the bearing member 131, when the bearing member 131 moves in the second direction relative to the guide member 132, the second magnetic block 1354 moves in the second direction relative to the second Hall sensor 1353, a magnetic field intensity on a surface of the second Hall sensor 1353 changes, and the second Hall sensor 1353 senses displacement of the second magnetic block 1354 based on the change of the magnetic field intensity, so as to detect the displacement of the bearing member 131 relative to the guide member 132.

For example, the first Hall sensor 1351 and the first magnetic block 1352 may be arranged on a same side as the first driving assembly 134a, and the second Hall sensor 1353 and the second magnetic block 1354 may be arranged on a same side as the second driving assembly 134b.

A Hall sensor 135 between the fixing member 133 and the guide member 132 detects the displacement of the guide member 132 relative to the fixing member 133, and a Hall sensor 135 between the guide member 132 and the bearing member 131 detects the displacement of the bearing member 131 relative to the guide member 132, to improve detection precision of the displacement of the guide member 132 and the bearing member 131, so as to precisely control the magnitude of the current in the first SMA wire 1342a and the second SMA wire 1342b based on the displacement which the lens 12 needs to compensate for.

For example, during movement of the guide member 132 and the bearing member 131, the displacement of the guide member 132 and the bearing member 131 is continuously detected by the Hall sensor 135, and a current is continuously supplied to the first SMA wire 1342a and the second SMA wire 1342b until the Hall sensor 135 detects that the guide member 132 and the bearing member 131 move to a compensation position, and the current supply to the first SMA wire 1342a and the second SMA wire 1342b is stopped.

As described above, the guide member 132 moves in the first direction, the bearing member 131 moves in the second direction, the SMA wire 1342 drives the elastic rod 1341 to bend and deform toward the side of the fixing member 133, and the displacement caused by the bending deformation of the moving end 1341e of the elastic rod 1341 is roughly in a linear direction, which may make the guide member 132 move roughly in the first direction and make the bearing member 131 move roughly in the second direction. To improve accuracy of moving directions of the guide member 132 and the bearing member 131, a first guiding structure may be further provided between the fixing member 133 and the guide member 132, and the first guiding structure is configured to move the guide member 132 in the first direction. A second guiding structure may be provided between the guide member 132 and the bearing member 131, and the second guiding structure is configured to move the bearing member 131 in the second direction. By using guiding effects of the first guiding structure and the second guiding structure, it is ensured that the guide member 132 moves precisely in the first direction, and the bearing member 131 moves precisely in the second direction.

Specifically, as shown in FIG. 7 and FIG. 11, the first guiding structure includes a first guide groove 1331, a first limiting groove 1321, and a first guide post 1391. The first guide groove 1331 is provided in a surface that is of the fixing member 133 and that faces the guide member 132, or the first guide groove 1331 is provided in a surface that is of the guide member 132 and that faces the fixing member 133. In an example in which the first guide groove 1331 is provided in the fixing member 133, the first limiting groove 1321 is provided in the guide member 132, the first guide groove 1331 and the first limiting groove 1321 are provided opposite to each other, both the first guide groove 1331 and the first limiting groove 1321 extend in the first direction, the first guide post 1391 is located in an accommodating space formed between the first guide groove 1331 and the first limiting groove 1321, and the first guide post 1391 can move in an extension direction of the first guide groove 1331 (the first limiting groove 1321). In this way, the guide member 132 can be limited to move in the first direction relative to the fixing member 133. In addition, the fixing member 133 and the guide member 132 are in sliding contact with each other by using the first guide post 1391, which can reduce friction between the fixing member 133 and the guide member 132 and ensure smooth movement of the guide member 132.

Still referring to FIG. 7 and FIG. 11, the second guiding structure includes a second guide groove 1322, a second limiting groove 1311, and a second guide post 1392. The second guide groove 1322 is provided in a surface that is of the guide member 132 and that faces the bearing member 131, or the second guide groove 1322 is provided in a surface that is of the bearing member 131 and that faces the guide member 132. In an example in which the second guide groove 1322 is provided in the guide member 132, the second limiting groove 1311 is provided in the bearing member 131, the second guide groove 1322 and the second limiting groove 1311 are provided opposite to each other, both the second guide groove 1322 and the second limiting groove 1311 extend in the second direction, the second guide post 1392 is located in an accommodating space formed between the second guide groove 1322 and the second limiting groove 1311, and the second guide post 1392 can move in an extension direction of the second guide groove 1322 (the second limiting groove 1311).

Because the guide member 132 is limited to move in the first direction, the second guide groove 1322 (the second limiting groove 1311) and the second guide post 1392 cooperate with each other to limit the movement of the bearing member 131 in the second direction relative to the guide member 132. In addition, similar to the effect of the first guide post 1391 between the fixing member 133 and the guide member 132, the second guide post 1392 can reduce friction between the guide member 132 and the bearing member 131, and ensure smooth movement of the bearing member 131.

In other implementations, the first guiding structure may include a first guide groove 1331 and a first guide post 1391, where the first guide groove 1331 is provided in a surface that is of the fixing member 133 and that faces the guide member 132 or in a surface that is of the guide member 132 and that faces the fixing member 133, the first guide groove 1331 extends in the first direction, and the first guide post 1391 is arranged opposite to the first guide groove 1331. In an example in which the first guide groove 1331 is provided in the surface of the fixing member 133, the first guide post 1391 may be fixed to the surface of the guide member 132. For example, the first guide post 1391 is bonded, welded or integrally formed on the surface of the guide member 132, and the first guide post 1391 extends into the first guide groove 1331 and moves along the first guide groove 1331 to limit the movement of the guide member 132 in the first direction.

The second guiding structure may include a second guide groove 1322 and a second guide post 1392, where the second guide groove 1322 is provided in a surface that is of the guide member 132 and that faces the bearing member 131 or in a surface that is of the bearing member 131 and that faces the guide member 132, the second guide groove 1322 extends in the second direction, and the second guide post 1392 is arranged opposite to the second guide groove 1322. In an example in which the second guide groove 1322 is provided in the surface of the guide member 132, the second guide post 1392 may be fixed to the surface of the bearing member 131. For example, the second guide post 1392 is bonded, welded or integrally formed on the surface of the bearing member 131, and the second guide post 1392 extends into the second guide groove 1322 and moves along the second guide groove 1322 to limit the movement of the bearing member in the second direction.

Because light emitted from a light outlet side of the lens 12 needs to sequentially pass through the bearing member 131, the guide member 132, and the fixing member 133 to reach a light sensing surface of the image sensor 151, as shown in FIG. 6, the bearing member 131, the guide member 132, and the fixing member 133 are usually provided with through holes 137. In view of this, the first guide groove 1331 (the first limiting groove 1321) and the second guide groove 1322 (the second limiting groove 1311) are usually provided in parts of the fixing member 133, the guide member 132, and the bearing member 131 close to edges. In addition, in an example in which the first direction and the second direction are perpendicular to each other, the second guide groove 1322 (second limiting groove 1311) and the second guide groove 1322 (second limiting groove 1311) may be perpendicular to each other.

In addition, when the guide member 132 or the bearing member 131 moves, to reduce an acting force between the first guide post 1391 and a first guide rail and an acting force between the second guide post 1392 and a second guide rail, the first guide post 1391 and the second guide post 1392 may be cylindrical guide posts. In this way, when the guide member 132 has a tendency to move in a direction other than the first direction relative to the fixing member 133, or when the bearing member 131 has a tendency to move in a direction other than the second direction relative to the guide member 132, rolling of the first guide post 1391 in the first guide groove 1331 (the first limiting groove 1321) and rolling of the second guide post 1392 in the second guide groove 1322 (the second limiting groove 1311) prevent the first guide post 1391 from generating excessive pressure on the first guide groove 1331 (the first limiting groove 1321) and prevent the second guide post 1392 from generating excessive pressure on the second guide groove 1322 (the second limiting groove 1311), thereby prolonging the service life of the fixing member 133, the guide member 132, and the bearing member 131.

The driving apparatus 13 according to this embodiment is configured to drive the lens to move in a plane perpendicular to the direction of the optical axis of the lens 12, so as to implement an anti-shake function of the lens 12. The driving apparatus 13 includes a bearing member 131 and a driving structure, where the lens 12 is fixed to the bearing member 131, and the driving structure includes a guide member 132, a fixing member 133, and the at least two groups of driving assemblies 134. At least one group of driving assemblies 134 is arranged between the fixing member 133 and the guide member 132, at least one group of driving assemblies 134 is arranged between the guide member 132 and the bearing member 131, so that the driving assemblies 134 between the fixing member 133 and the guide member 132 drive the guide member 132 to move in the first direction, the driving assemblies 134 between the guide member 132 and the bearing member 131 drive the bearing member 131 to move in the second direction, and an included angle is formed between the first direction and the second direction to drive the lens 12 to move arbitrarily in a plane where the bearing member 131 is located. An elastic rod 1341 and an SMA wire 1342 are used as one driving assembly 134, and the SMA wire 1342 expands or contracts to drive an end of the elastic rod 1341 to bend and deform, and the bending deformation of the end of the elastic rod 1341 generates displacement to drive the guide member 132 or the bearing member 131 to move. The end of the elastic rod 1341 generates larger bending deformation, which can increase a movement amount of the SMA wire 1342, increase a stroke range of the driving apparatus 13, and improve precision of lens 12 anti-shake and optical performance of the camera module 1.

In the descriptions of embodiments of this application, it should be noted that unless otherwise specified and defined explicitly, the terms "mount", "connected to", and "connect" should be understood in a broad sense, and for example, may be a fixed connection or an indirect connection by using an intermediate medium, or may be internal communication between two elements or an interaction relationship between two elements. A person of ordinary skill in the art can understand specific meanings of the foregoing terms in embodiments of this application based on a specific situation.

In the specification of embodiments, claims, and accompanying drawings of this application, the terms "first", "second", "third", "fourth", and the like (if existent) are intended to distinguish between similar objects but do not necessarily indicate a specific order or sequence.

## Claims

1. A driving apparatus (13) for driving a lens (12) of a camera module to move, comprising a bearing member (131) and a driving structure, wherein the lens is fixed to the bearing member, and the driving structure comprises a guide member (132), a fixing member (133), and at least two groups of driving assemblies (134); and the guide member and the fixing member are sequentially arranged on a light outlet side of the lens in a direction of an optical axis of the lens;
at least one group of driving assemblies is connected between the fixing member and the guide member, at least one group of driving assemblies is connected between the guide member and the bearing member, the driving assemblies connected between the fixing member and the guide member are configured to drive the guide member to move in a first direction, and the driving assemblies connected between the guide member and the bearing member are configured to drive the bearing member to move in a second direction, wherein an included angle is formed between the first direction and the second direction, wherein the first direction and the second direction are perpendicular to each other; and
the driving assemblies each comprise an elastic rod (1341) and a shape memory alloy wire (1342), wherein the shape memory alloy wire drives an end of the elastic rod (1341e) to bend and deform through expansion and contraction of the shape memory alloy wire, and the elastic rod deforms and drives the guide member or the bearing member to move;
wherein the first elastic rod extends along a side wall of the fixing member, and the deformed end of the first elastic rod is connected to a corner of the guide member or a corner of the bearing member;
wherein a connecting portion (1341c) is arranged between the two ends of the first elastic rod, and the shape memory alloy wire is connected to the connecting portion; and
wherein a middle section of the shape memory alloy wire is connected to the connecting portion, and two ends of the shape memory alloy wire are connected on a same side of the connecting portion.

2. The driving apparatus according to claim 1, wherein a first driving assembly (134a) is connected between the fixing member and the guide member, the first driving assembly comprises a first elastic rod (1341a) and a first shape memory alloy wire (1342a), two ends of the first elastic rod are connected to the fixing member and the guide member respectively, and the first shape memory alloy wire is connected between the fixing member and the first elastic rod; and
a second driving assembly (134b) is connected between the guide member and the bearing member, the second driving assembly comprises a second elastic rod (1341b) and a second shape memory alloy wire (1342b), two ends of the second elastic rod are connected to the guide member and the bearing member respectively, and the second shape memory alloy wire is connected between the guide member and the second elastic rod.

3. The driving apparatus according to claim 2, wherein the first driving assembly and the second driving assembly are located on different sides of the fixing member respectively, and an extension direction of the first driving assembly and an extension direction of the second driving assembly are staggered.

4. The driving apparatus according to claim 3, wherein the first driving assembly and the second driving assembly are located on two adjacent sides of the fixing member respectively.

5. The driving apparatus according to any one of claims 1 to 4, wherein the second elastic rod extends along a side wall of the fixing member, and the deformed end of the elastic rod is connected to a corner of the guide member or a corner of the bearing member.

6. The driving apparatus according to claim 5, wherein two ends of the second elastic rod extend to two ends of the side wall of the fixing member respectively.

7. The driving apparatus according to claim 5 or 6, wherein a connecting portion is arranged between the two ends of the second elastic rod, and the shape memory alloy wire is connected to the connecting portion.

8. The driving apparatus according to claim 7, wherein a middle section of the shape memory alloy wire is connected to the connecting portion, and two ends of the shape memory alloy wire are located on a same side of the connecting portion.

9. The driving apparatus according to claim 8, wherein the fixing member and the guide member each are provided with a first conductive portion and a second conductive portion, and the two ends of the shape memory alloy wire are fixed to the first conductive portion and the second conductive portion respectively.

10. The driving apparatus according to any one of claims 1 to 9, further comprising a first guiding structure and a second guiding structure, wherein
the first guiding structure comprises a first guide groove (1331), the first guide groove is provided in a surface that is of the fixing member and that faces the guide member or in a surface that is of the guide member and that faces the fixing member, the first guide groove extends in the first direction, and the fixing member and the guide member move relative to each other in an extension direction of the first guide groove; and
the second guiding structure comprises a second guide groove (1322), the second guide groove is provided in a surface that is of the guide member and that faces the bearing member or in a surface that is of the bearing member and that faces the guide member, the second guide groove extends in the second direction, and the guide member and the bearing member move relative to each other in an extension direction of the second guide groove.

11. The driving apparatus according to claim 10, wherein the first guiding structure further comprises a first guide post (1391), and part of the first guide post is located in the first guide groove and moves along the first guide groove; and
the second guiding structure further comprises a second guide post (1392), and part of the second guide post is located in the second guide groove and moves along the second guide groove.

12. The driving apparatus according to claim 11, wherein the first guiding structure further comprises a first limiting groove, the first limiting groove is formed in the surface of the guide member or the surface of the fixing member, the first limiting groove extends in the first direction and is opposite to the first guide groove, and the first guide post is slidably arranged in the first limiting groove; and
the second guiding structure further comprises a second limiting groove, the second limiting groove is formed in the surface of the bearing member or the surface of the guide member, the second limiting groove extends in the second direction and is opposite to the second guide groove, and the second guide post is slidably arranged in the second limiting groove.

13. The driving apparatus according to claim 11, wherein the first guide post is fixed to a part that is opposite to the first guide groove and that is on the guide member or the fixing member, and the second guide post is fixed to a part that is opposite to the second guide groove and that is on the bearing member or the guide member.

14. The driving apparatus according to any one of claims 1 to 13, further comprising a first displacement detection assembly and a second displacement detection assembly, wherein
the first displacement detection assembly comprises a first Hall sensor (1351) and a first magnetic block (1352), wherein one of the fixing member and the guide member is provided with the first Hall sensor, the other is provided with the first magnetic block, and the first Hall sensor and the first magnetic block are arranged opposite to each other; and
the second displacement detection assembly comprises a second Hall sensor (1353) and a second magnetic block (1354), wherein one of the guide member and the bearing member is provided with the second Hall sensor, the other is provided with the second magnetic block, and the second Hall sensor and the second magnetic block are arranged opposite to each other.

15. A camera module, comprising a housing (11), a lens (12), and the driving apparatus (13) according to any one of claims 1 to 14, wherein a surface of a side of the housing is provided with a mounting hole (1111), the lens is partially accommodated in the housing through the mounting hole, and the driving apparatus is located in the housing.

## Patentansprüche

1. Eine Antriebsvorrichtung (13) zum Antrieb einer Linse (12) eines Kameramoduls, um sich zu bewegen, umfassend ein Lagerteil (131) und eine Antriebsstruktur, wobei die Linse am Lagerteil befestigt ist und die Antriebsstruktur ein Führungselement (132), ein Befestigungselement (133) und mindestens zwei Gruppen von Antriebseinheiten (134) umfasst; und das Führungselement und das Befestigungselement sind nacheinander auf der Lichtaustrittsseite der Linse in Richtung der optischen Achse der Linse angeordnet;
mindestens eine Gruppe von Antriebseinheiten ist zwischen dem Befestigungselement und dem Führungselement verbunden, mindestens eine Gruppe von Antriebseinheiten ist zwischen dem Führungselement und dem Lagerelement verbunden, die zwischen dem Befestigungselement und dem Führungselement verbundenen Antriebseinheiten sind so konfiguriert, dass sie das Führungselement in eine erste Richtung bewegen, und die zwischen dem Führungselement und dem Lagerelement verbundenen Antriebseinheiten sind so konfiguriert, dass sie das Lagerelement in eine zweite Richtung bewegen, wobei ein eingeschlossener Winkel zwischen der ersten Richtung und der zweiten Richtung gebildet wird, wobei die erste Richtung und die zweite Richtung senkrecht zueinander stehen; und
Die Antriebseinheiten umfassen jeweils eine elastische Stange (1341) und einen Formgedächtnislegierungsdraht (1342), wobei der Formgedächtnislegierungsdraht ein Ende der elastischen Stange (1341e) durch Ausdehnung und Kontraktion des Formgedächtnislegierungsdrahts zum Biegen und Verformen antreibt, und die elastische Stange sich verformt und das Führungselement oder das Lagerelement bewegt;
wobei sich die erste elastische Stange entlang einer Seitenwand des Befestigungselements erstreckt und das verformte Ende der ersten elastischen Stange mit einer Ecke des Führungselements oder einer Ecke des Lagerelements verbunden ist;
wobei ein Verbindungsabschnitt (1341c) zwischen den beiden Enden der ersten elastischen Stange angeordnet ist und der Formgedächtnislegierungsdraht mit dem Verbindungsabschnitt verbunden ist; und
wobei ein mittlerer Abschnitt des Formgedächtnislegierungsdrahts mit dem Verbindungsabschnitt verbunden ist und zwei Enden des Formgedächtnislegierungsdrahts auf derselben Seite des Verbindungsabschnitts verbunden sind.

2. Die Antriebsvorrichtung nach Anspruch 1, wobei eine erste Antriebseinheit (134a) zwischen dem Befestigungselement und dem Führungselement verbunden ist, die erste Antriebseinheit umfasst eine erste elastische Stange (1341a) und einen ersten Formgedächtnislegierungsdraht (1342a), wobei die beiden Enden der ersten elastischen Stange jeweils mit dem Befestigungselement und dem Führungselement verbunden sind, und der erste Formgedächtnislegierungsdraht zwischen dem Befestigungselement und der ersten elastischen Stange verbunden ist; und
Eine zweite Antriebseinheit (134b) ist zwischen dem Führungselement und dem Lagerelement verbunden, die zweite Antriebseinheit umfasst eine zweite elastische Stange (1341b) und einen zweiten Formgedächtnisdraht (1342b), wobei die beiden Enden der zweiten elastischen Stange jeweils mit dem Führungselement und dem Lagerelement verbunden sind, und der zweite Formgedächtnisdraht zwischen dem Führungselement und der zweiten elastischen Stange verbunden ist.

3. Der Antriebsapparat nach Anspruch 2, wobei die erste Antriebseinheit und die zweite Antriebseinheit jeweils auf verschiedenen Seiten des Befestigungselements angeordnet sind und eine Verlängerungsrichtung der ersten Antriebseinheit und eine Verlängerungsrichtung der zweiten Antriebseinheit versetzt sind.

4. Der Antriebsapparat nach Anspruch 3, wobei die erste Antriebseinheit und die zweite Antriebseinheit jeweils an zwei benachbarten Seiten des Befestigungselements angeordnet sind.

5. Der Antriebsapparat nach einem der Ansprüche 1 bis 4, wobei die zweite elastische Stange entlang einer Seitenwand des Befestigungselements verläuft und das verformte Ende der elastischen Stange mit einer Ecke des Führungselements oder einer Ecke des Lagerelements verbunden ist.

6. Der Antriebsapparat nach Anspruch 5, wobei zwei Enden der zweiten elastischen Stange sich jeweils zu zwei Enden der Seitenwand des Befestigungselements erstrecken.

7. Der Antriebsapparat nach Anspruch 5 oder 6, wobei ein Verbindungsabschnitt zwischen den beiden Enden der zweiten elastischen Stange angeordnet ist und der Formgedächtnislegierungsdraht mit dem Verbindungsabschnitt verbunden ist.

8. Der Antriebsapparat nach Anspruch 7, wobei ein mittlerer Abschnitt des Formgedächtnislegierungsdrahtes mit dem Verbindungsabschnitt verbunden ist und zwei Enden des Formgedächtnislegierungsdrahtes sich auf derselben Seite des Verbindungsabschnitts befinden.

9. Der Antriebsapparat nach Anspruch 8, wobei das Befestigungselement und das Führungselement jeweils mit einem ersten leitfähigen Abschnitt und einem zweiten leitfähigen Abschnitt versehen sind, und die beiden Enden des Formgedächtnislegierungsdrahtes jeweils an dem ersten leitfähigen Abschnitt und dem zweiten leitfähigen Abschnitt befestigt sind.

10. Der Antriebsapparat nach einem der Ansprüche 1 bis 9, ferner umfassend eine erste Führungsstruktur und eine zweite Führungsstruktur, wobei
Die erste Führungsstruktur umfasst eine erste Führungsnut (1331), die erste Führungsnut ist in einer Oberfläche vorgesehen, die entweder vom Befestigungselement stammt und dem Führungselement zugewandt ist, oder in einer Oberfläche, die vom Führungselement stammt und dem Befestigungselement zugewandt ist, die erste Führungsnut erstreckt sich in die erste Richtung, und das Befestigungselement und das Führungselement bewegen sich relativ zueinander in einer Verlängerungsrichtung der ersten Führungsnut; und
Die zweite Führungsstruktur umfasst eine zweite Führungsnut (1322), die zweite Führungsnut ist in einer Oberfläche vorgesehen, die sich am Führungselement befindet und die dem Lagerelement zugewandt ist, oder in einer Oberfläche, die sich am Lagerelement befindet und die dem Führungselement zugewandt ist, die zweite Führungsnut erstreckt sich in der zweiten Richtung, und das Führungselement und das Lagerelement bewegen sich relativ zueinander in einer Verlängerungsrichtung der zweiten Führungsnut.

11. Der Antriebsapparat nach Anspruch 10, wobei die erste Führungsstruktur ferner einen ersten Führungsstift (1391) umfasst, und ein Teil des ersten Führungsstifts befindet sich in der ersten Führungsnut und bewegt sich entlang der ersten Führungsnut; und
Die zweite Führungsstruktur umfasst ferner einen zweiten Führungsstift (1392), und ein Teil des zweiten Führungsstifts befindet sich in der zweiten Führungsnut und bewegt sich entlang der zweiten Führungsnut.

12. Der Antriebsapparat nach Anspruch 11, wobei die erste Führungsstruktur ferner eine erste Begrenzungsnut umfasst, die erste Begrenzungsnut in der Oberfläche des Führungselements oder der Oberfläche des Befestigungselements ausgebildet ist, die erste Begrenzungsnut sich in der ersten Richtung erstreckt und der ersten Führungsnut gegenüberliegt, und der erste Führungsstift in der ersten Begrenzungsnut verschiebbar angeordnet ist; und
Die zweite Führungsstruktur umfasst ferner eine zweite Begrenzungsnut, die zweite Begrenzungsnut ist in der Oberfläche des Lagerelements oder der Oberfläche des Führungselements ausgebildet, die zweite Begrenzungsnut erstreckt sich in die zweite Richtung und ist der zweiten Führungsnut gegenüberliegend, und der zweite Führungsstift ist gleitend in der zweiten Begrenzungsnut angeordnet.

13. Der Antriebsapparat nach Anspruch 11, wobei der erste Führungsstift an einem Teil befestigt ist, das dem ersten Führungsnut gegenüberliegt und das sich am Führungselement oder am Befestigungselement befindet, und der zweite Führungsstift an einem Teil befestigt ist, das dem zweiten Führungsnut gegenüberliegt und das sich am Lagerelement oder am Führungselement befindet.

14. Der Antriebsapparat nach einem der Ansprüche 1 bis 13, ferner umfassend eine erste Verschiebungserfassungseinheit und eine zweite Verschiebungserfassungseinheit, wobei
Die erste Verschiebungserfassungseinheit umfasst einen ersten Hall-Sensor (1351) und einen ersten Magnetblock (1352), wobei eines der Befestigungselemente und das Führungselement mit dem ersten Hall-Sensor versehen ist, das andere mit dem ersten Magnetblock, und der erste Hall-Sensor und der erste Magnetblock einander gegenüber angeordnet sind; und
Die zweite Verschiebungserfassungseinheit umfasst einen zweiten Hall-Sensor (1353) und einen zweiten Magnetblock (1354), wobei eines der Führungselemente und das Lagerelement mit dem zweiten Hall-Sensor versehen ist, das andere mit dem zweiten Magnetblock, und der zweite Hall-Sensor und der zweite Magnetblock einander gegenüber angeordnet sind.

15. Ein Kameramodul, umfassend ein Gehäuse (11), eine Linse (12) und die Antriebsvorrichtung (13) nach einem der Ansprüche 1 bis 14, wobei eine Oberfläche einer Seite des Gehäuses mit einem Montageloch (1111) versehen ist, die Linse teilweise durch das Montageloch im Gehäuse untergebracht ist und die Antriebsvorrichtung sich im Gehäuse befindet.

## Revendications

1. Un appareil de conduite (13) pour entraîner un objectif (12) d'un module de caméra à se déplacer, comprenant un élément de support (131) et une structure de conduite, dans lequel l'objectif est fixé à l'élément de support, et la structure de conduite comprend un élément de guidage (132), un élément de fixation (133), et au moins deux groupes d'ensembles de conduite (134); et l'élément de guidage et l'élément de fixation sont disposés séquentiellement sur un côté de sortie de lumière de l'objectif dans la direction d'un axe optique de l'objectif;
au moins un groupe d'ensembles d'entraînement est connecté entre l'élément de fixation et l'élément de guidage, au moins un groupe d'ensembles d'entraînement est connecté entre l'élément de guidage et l'élément de support, les ensembles d'entraînement connectés entre l'élément de fixation et l'élément de guidage sont configurés pour entraîner l'élément de guidage à se déplacer dans une première direction, et les ensembles d'entraînement connectés entre l'élément de guidage et l'élément de support sont configurés pour entraîner l'élément de support à se déplacer dans une deuxième direction, un angle inclus étant formé entre la première direction et la deuxième direction, la première direction et la deuxième direction étant perpendiculaires l'une à l'autre; et
les ensembles d'entraînement comprennent chacun une tige élastique (1341) et un fil en alliage à mémoire de forme (1342), le fil en alliage à mémoire de forme entraînant une extrémité de la tige élastique (1341e) à se plier et à se déformer par expansion et contraction du fil en alliage à mémoire de forme, et la tige élastique se déforme et entraîne le membre de guidage ou le membre de support à se déplacer;
où la première tige élastique s'étend le long d'une paroi latérale de l'élément de fixation, et l'extrémité déformée de la première tige élastique est connectée à un coin de l'élément de guidage ou à un coin de l'élément de support;
où une partie de connexion (1341c) est disposée entre les deux extrémités de la première tige élastique, et le fil en alliage à mémoire de forme est connecté à la partie de connexion; et
où une section médiane du fil en alliage à mémoire de forme est connectée à la partie de connexion, et les deux extrémités du fil en alliage à mémoire de forme sont connectées du même côté de la partie de connexion.

2. L'appareil de conduite selon la revendication 1, dans lequel un premier ensemble de conduite (134a) est connecté entre l'élément de fixation et l'élément de guidage, le premier ensemble de conduite comprend une première tige élastique (1341a) et un premier fil en alliage à mémoire de forme (1342a), les deux extrémités de la première tige élastique sont respectivement connectées à l'élément de fixation et à l'élément de guidage, et le premier fil en alliage à mémoire de forme est connecté entre l'élément de fixation et la première tige élastique; et
un deuxième ensemble d'entraînement (134b) est connecté entre l'élément de guidage et l'élément de support, le deuxième ensemble d'entraînement comprend une deuxième tige élastique (1341b) et un deuxième fil en alliage à mémoire de forme (1342b), les deux extrémités de la deuxième tige élastique sont respectivement connectées à l'élément de guidage et à l'élément de support, et le deuxième fil en alliage à mémoire de forme est connecté entre l'élément de guidage et la deuxième tige élastique.

3. L'appareil de conduite selon la revendication 2, dans lequel le premier ensemble de conduite et le deuxième ensemble de conduite sont situés respectivement sur des côtés différents de l'élément de fixation, et une direction d'extension du premier ensemble de conduite et une direction d'extension du deuxième ensemble de conduite sont décalées.

4. L'appareil de conduite selon la revendication 3, dans lequel le premier ensemble de conduite et le deuxième ensemble de conduite sont situés respectivement sur deux côtés adjacents de l'élément de fixation.

5. L'appareil de conduite selon l'une quelconque des revendications 1 à 4, dans lequel la deuxième tige élastique s'étend le long d'une paroi latérale de l'élément de fixation, et l'extrémité déformée de la tige élastique est connectée à un coin de l'élément de guidage ou à un coin de l'élément de support.

6. L'appareil de conduite selon la revendication 5, dans lequel les deux extrémités de la deuxième tige élastique s'étendent respectivement aux deux extrémités de la paroi latérale de l'élément de fixation.

7. L'appareil de conduite selon la revendication 5 ou 6, dans lequel une partie de connexion est disposée entre les deux extrémités de la deuxième tige élastique, et le fil en alliage à mémoire de forme est connecté à la partie de connexion.

8. L'appareil de conduite selon la revendication 7, dans lequel une section médiane du fil en alliage à mémoire de forme est connectée à la partie de connexion, et les deux extrémités du fil en alliage à mémoire de forme sont situées du même côté de la partie de connexion.

9. L'appareil de conduite selon la revendication 8, dans lequel l'élément de fixation et l'élément de guidage sont chacun pourvus d'une première partie conductrice et d'une seconde partie conductrice, et les deux extrémités du fil en alliage à mémoire de forme sont fixées respectivement à la première partie conductrice et à la seconde partie conductrice.

10. L'appareil de conduite selon l'une quelconque des revendications 1 à 9, comprenant en outre une première structure de guidage et une deuxième structure de guidage, dans lequel
la première structure de guidage comprend une première rainure de guidage (1331), la première rainure de guidage est prévue dans une surface qui est du membre de fixation et qui fait face au membre de guidage ou dans une surface qui est du membre de guidage et qui fait face au membre de fixation, la première rainure de guidage s'étend dans la première direction, et le membre de fixation et le membre de guidage se déplacent l'un par rapport à l'autre dans une direction d'extension de la première rainure de guidage; et
la deuxième structure de guidage comprend une deuxième rainure de guidage (1322), la deuxième rainure de guidage est disposée dans une surface qui est celle de l'élément de guidage et qui fait face à l'élément de support ou dans une surface qui est celle de l'élément de support et qui fait face à l'élément de guidage, la deuxième rainure de guidage s'étend dans la deuxième direction, et l'élément de guidage et l'élément de support se déplacent l'un par rapport à l'autre dans une direction d'extension de la deuxième rainure de guidage.

11. L'appareil de conduite selon la revendication 10, dans lequel la première structure de guidage comprend en outre un premier poteau de guidage (1391), et une partie du premier poteau de guidage est située dans la première rainure de guidage et se déplace le long de la première rainure de guidage; et
la deuxième structure de guidage comprend en outre un deuxième poteau de guidage (1392), et une partie du deuxième poteau de guidage est située dans la deuxième rainure de guidage et se déplace le long de la deuxième rainure de guidage.

12. L'appareil de conduite selon la revendication 11, dans lequel la première structure de guidage comprend en outre une première rainure de limitation, la première rainure de limitation est formée dans la surface de l'élément de guidage ou la surface de l'élément de fixation, la première rainure de limitation s'étend dans la première direction et est opposée à la première rainure de guidage, et le premier poteau de guidage est disposé de manière coulissante dans la première rainure de limitation; et
la deuxième structure de guidage comprend en outre une deuxième rainure de limitation, la deuxième rainure de limitation est formée dans la surface de l'élément de support ou la surface de l'élément de guidage, la deuxième rainure de limitation s'étend dans la deuxième direction et est opposée à la deuxième rainure de guidage, et le deuxième poteau de guidage est disposé de manière coulissante dans la deuxième rainure de limitation.

13. L'appareil de conduite selon la revendication 11, dans lequel le premier poteau de guidage est fixé à une partie qui est opposée à la première rainure de guidage et qui se trouve sur l'élément de guidage ou l'élément de fixation, et le deuxième poteau de guidage est fixé à une partie qui est opposée à la deuxième rainure de guidage et qui se trouve sur l'élément de support ou l'élément de guidage.

14. L'appareil de conduite selon l'une quelconque des revendications 1 à 13, comprenant en outre un premier ensemble de détection de déplacement et un second ensemble de détection de déplacement, dans lequel
le premier ensemble de détection de déplacement comprend un premier capteur Hall (1351) et un premier bloc magnétique (1352), l'un des éléments de fixation et l'élément de guidage étant pourvu du premier capteur Hall, l'autre étant pourvu du premier bloc magnétique, et le premier capteur Hall et le premier bloc magnétique étant disposés l'un en face de l'autre; et
le deuxième ensemble de détection de déplacement comprend un deuxième capteur Hall (1353) et un deuxième bloc magnétique (1354), l'un des éléments de guidage et l'élément de support étant équipé du deuxième capteur Hall, l'autre étant équipé du deuxième bloc magnétique, et le deuxième capteur Hall et le deuxième bloc magnétique étant disposés l'un en face de l'autre.

15. Un module de caméra, comprenant un boîtier (11), une lentille (12) et le dispositif de commande (13) selon l'une quelconque des revendications 1 à 14, dans lequel une surface d'un côté du boîtier est pourvue d'un trou de montage (1111), la lentille est partiellement logée dans le boîtier à travers le trou de montage, et le dispositif de commande est situé dans le boîtier.
